## Europäisches Patentamt
## European Patent Office
## Office européen des brevets

(19)

(11) Publication number: **0 002 347**
**B1**

(12)

# EUROPEAN PATENT SPECIFICATION

(45) Date of publication of patent specification: **18.11.81**

(51) Int. Cl.³: **C 08 L 23/32, C 08 K 5/01**

(21) Application number: **78300677.8**

(22) Date of filing: **28.11.78**

(54) Neutralised sulfonated elastomeric compositions.

(30) Priority: **29.11.77 US 855724**
**29.11.77 US 855728**
**29.11.77 US 855757**
**29.11.77 US 855765**
**29.11.77 US 855773**

(43) Date of publication of application:
**13.06.79 Bulletin 79/12**

(45) Publication of the grant of the European patent:
**18.11.81 Bulletin 81/46**

(84) Designated Contracting States:
**BE DE FR GB NL**

(56) References cited:
**US - A - 2 416 060**
**US - A - 3 373 132**
**US - A - 3 642 728**
**US - A - 3 974 240**

(73) Proprietor: **Exxon Research and Engineering Company**
**P.O.Box 390 200 Park Avenue**
**Florham Park New Jersey 07932 (US)**

(72) Inventor: **Makowski, Henry Stanislaus**
**2045 Winding Brook Way**
**Scotch Plains New Jersey (US)**
Inventor: **Klein, Robert Raymond**
**40 Fern Place**
**Berkeley Heights New Jersey (US)**
Inventor: **Lundberg, Robert Dean**
**4 Brian Drive**
**Bridgewater New Jersey (US)**
Inventor: **Duvdevani, Ilan**
**559 Nordhoff Drive**
**Leonia New Jersey (US)**
Inventor: **Bock, Jan**
**500 Juniper Lane**
**Bridgewater New Jersey (US)**
Inventor: **Phillips, Robert Richard**
**506 Sixth Avenue**
**Spring Lake Heights New Jersey (US)**

(74) Representative: **Field, Roger Norton et al,**
**Hanover Court 5 Hanover Square**
**London W1R OHQ (GB)**

Courier Press, Leamington Spa, England.

# 0 002 347

## Neutralised Sulphonated Elastomeric Compositions

This invention relates to neutralised sulphonated polymer-containing compositions.

Various compositions containing neutralised sulphonate elastomers have been described in the past e.g. in U.S. Patent Specifications 3642728 and 3974240.

According to this invention elastomeric compositions comprise certain neutralized sulphonated elastomeric polymers inorganic fillers, non-polar process oils and preferential ionic plasticisers. Optionally included are waxes and/or reinforcing fillers. The resultant composition has a viscosity at 0.73 $sec^{-1}$ at 200°C. of $5 \times 10^3$ Pas to $1 \times 10^5$ Pas ($5 \times 10^4$ to $1 \times 10^6$ poises), and an advantage is that the compositions are readily processable in a conventional injection moulding or extrusion process into a high performance elastomeric article such as footwear or garden hose. The resultant elastomeric article has excellent low and elevated temperature flexibility, excellent abrasion resistance, excellent flex fatigue, superior dimensional stability, good resilience, a rubber-like feel and a Shore A Hardness of 45 to 85.

Various critically selected additives can be incorporated into the blend compositions such as a polyolefin thermoplastic for further modification of hardness as well as rheological properties, a whitening pigment, and a lubricant for improvement of the physical appearance such as shine of the finished footwear as well as the ability to eject easily the formed article from the mould during the injection molding process.

The neutralized sulfonated elastomeric polymers used in compositions of this present invention are derived from unsaturated polymers which include low unsaturated elastomeric polymers such as Butyl rubber, or EPDM terpolymers.

Alternative unsaturated polymers are partially hydrogenated polyisoprenes, partially hydrogenated polybutadienes, Neoprene, and styrene-butadiene copolymers of isoprene-styrene random copolymers.

The expression "Butyl rubber" as employed in the specification and claims is intended to include copolymers made from a polymerization reaction mixture having therein from 70 to 99.5% by weight of an isoolefin which has 4 to 7 carbon atoms per molecule, e.g. isobutylene and 0.5 to 30% by weight of a conjugated multiolefin having from 4 to 14 carbon atoms per molecule, e.g. isoprene. The resulting copolymer contains 85 to 99.8% by weight of combined isoolefin and 0.2 to 15% of combined multiolefin.

Butyl rubber generally has a Staudinger molecular weight of 20,000 to 500,000, preferably 25,000 to 400,000, especially 100,000 to 400,000, and a Wijs Iodine No. of 0.5 to 50, preferably 1 to 15. The preparation of Butyl rubber is described in U.S. Patent 2,356,128.

For the purposes of this invention, the Butyl rubber may have incorporated therein from 0.2 to 10 wt.% of combined multiolefin; preferably 0.5 to 6 wt.%; more preferably 1 to 4 wt.%, e.g. 2 wt.%.

Illustrative of such a Buryl rubber is Exxon Butyl 365 (Exxon Chemical Co.), having a mole percent unsaturation of 2.0% and a Mooney viscosity (ML, 1+3, 100°C.) of 40—50.

Low molecular weight Butyl rubbers, i.e. Butyl rubbers having a viscosity average molecular weight of 5,000 to 85,000 and a mole percent unsaturation of 1 to 5% may be sulfonated to produce the polymers useful in this invention. Preferably, these polymers have a viscosity average molecular weight of 25,000 to 60,000.

The EPDM terpolymers are low unsaturated polymers having 1 to 10.0 wt.% olefinic unsaturation, preferably 2 to 8%, more preferably 3 to 7% defined according to the definition as found in ASTM-D—1418—64 and is intended to mean terpolymers containing ethylene and propylene in the backbone and a diene in the side chain. Illustrative methods for producing these terpolymers are found in U.S. Patent 3,280,082, British Patent 1,030,289 and French Patent 1,386,600. The preferred polymers contain 40 to 80 wt.% ethylene and 1 to 10 wt.% of a diene monomer, the balance of the polymer being propylene. Preferably, the polymer contains 50 to 75 wt.% ethylene, e.g. 50 wt.% and 2.6 to 8.0 wt.% diene monomer, e.g. 5.0 wt.%. The diene monomer is preferably a non-conjugated diene. In the case of the manufacture of a ski boot by an injection molding process it is desirable to have at least 65 wt.% ethylene to the EPDM backbone, more preferably 68 wt.% and most preferably 70 wt.%.

Illustrative of these non-conjugated diene monomers which may be used in the terpolymer (EPDM) are 1,4-hexadiene, dicyclopentadiene, a 5-alkylidene-2-norbornene e.g. 5-ethylidene-2-norbornene, a 5-alkenyl-2-norbornene, e.g. 5-methylene-2-norbornene or 5-propenyl-2-norbornene, tetrahydroindene and methyl tetrahydroindene.

A typical EPDM is Vistalon 2504 (Exxon Chemical Co.), a terpolymer having a Mooney viscosity (ML, 1+8, 100°C.) of 40 and having an ethylene content of 40 wt.% and a 5-ethylidene-2-norbornene content of 5.0 wt.% the $\overline{M}n$ of Vistalon 2504 is 47,000, the $\overline{M}v$ is 145,000 and the $\overline{M}w$ is 174,000.

Another EPDM terpolymer Vistalon 2504—20 is derived from V—2504 (Exxon Chemical Co.) by a controlled extrusion process, wherein the resultant Mooney viscosity at 100°C. is 20. The $\overline{M}n$ of Vistalon 2504—20 is 26,000, the $\overline{M}v$ is 90,000 and the $\overline{M}w$ is 125,000. (The words "Exxon" and "Vistalon" are registered Trade Marks at least in the United Kingdom.)

2

# O 002 347

Nordel 1320 (DuPont) is another terpolymer having a Mooney viscosity at 100°C. of 25 and having 53 wt.% of ethylene, 3.5 wt.% of 1,4-hexadiene, and 43.5 wt.% of propylene. (The word "Nordel" is a registered Trade Mark at least in the United Kingdom.)

The EPDM terpolymers used in compositions of this invention usually have a number average molecular weight ($\overline{M}n$) of 10,000 to 200,000, preferably of 15,000 to 100,000 and more preferably of 20,000 to 60,000. The Mooney viscosity (ML, 1+8, 100°C.) of the EPDM terpolymer is usually 5 to 60, preferably 10 to t0, more preferably 15 to 40. The $\overline{M}v$ of the EPDM terpolymer is preferably below 350,000 and more preferably below 300,000. The $\overline{M}w$ of the EPDM terpolymer is preferably below 500,000 and more preferably below 350,000.

The elastomeric polymer may be dissolved in a non-reactive solvent such a a chlorinated aliphatic hydrocarbon, chlorinated aromatic hydrocarbon, an aromatic hydrocarbon, or an aliphatic hydrocarbon such as carbon tetrachloride, dichloroethane, chlorobenzene, benzene, toluene, xylene, cyclohexane, pentane, isopentane, hexane, isohexane, or heptane. The preferred solvents are the lower boiling aliphatic hydrocarbons. A sulfonating agent is added to the solution of the elastomeric polymer and non-reactive solvent at a temperature of −100°C. to 100°C. usually for a period of time of 1 to 60 minutes, preferably at room temperature for 5 to 45 minutes; and more preferably 15 to 30. Typical sulfonating agents are described in U.S. Patents 3,642,728 and 3,836,511. These sulfonating agents may be an acyl sulfate, a mixture of sulfuric acid and an acid anhydride or a complex of a sulfur trioxide donor and a Lewis base containing oxygen, sulfur, or phosphorous. Typical sulfur trioxide donors are $SO_3$, chlorosulfonic acid, fluorosulfonic acid, sulfuric acid, oleum, etc. Typical Lewis bases are: dioxane, tetrahydrofuran, tetrahydrothiophene, or triethylphosphate. The most preferred sulfonation agent is benzoyl, acetyl, propionyl or butyryl sulfate. The acyl sulfate can be formed in situ in the reaction medium or pregenerated before its addition to the reaction medium in a chlorinated aliphatic or aromatic hydrocarbon.

It should be pointed out that neither the sulfonating agent nor the manner of sulfonation is critical, provided that the sulfonating method does not degrade the polymer backbone. The reaction is quenched with an aliphatic alcohol such as methanol, ethanol, isopropanol, with an aromatic hydroxyl compound, such as phenol, a cyclo aliphatic alcohol such as a cyclohexanol or with water. The acid form of the sulfonated elastomeric polymer has 15 to 50, preferably 20 to 40 meq. $SO_3H$ groups per 100 grams of sulfonated polymer. The meq. of $SO_3H$/100 grams of polymer is determined by both titration of the polymeric sulfonic acid and Dietert Sulfur analysis. In the titration of the sulfonic acid, the polymer is dissolved in solvent consisting of 95 parts by volume of toluene and 5 parts by volume of methanol at a concentration level of 50 grams per liter of solvent. The acid form is titrated with ethanolic sodium hydroxide to an Alizarin Thymolphthalein endpoint.

The acid form of the sulfonated polymer is gel free and hydrolytically stable. Gel is measured by stirring a given weight of polymer in a solvent comprised of 95 parts by volume of toluene/5 parts by volume of methanol at a concentration of 5 wt.% for 24 hours, allowing the mixture ot settle, withdrawing a weighed sample of the supernatant solution and evaporating to dryness.

Hydrolytically stable means that the acid function, in this case the sulfonic acid, will not be eliminated under neutral or slightly basic conditions to a neutral moiety which is incapable of being converted to highly ionic functionality.

Neutralization of the acid form of the sulfonated elastomeric polymer is done by the addition of a solution of a basic salt to the acid form of the sulfonated elastomeric polymer dissolved in the mixture of the aliphatic alcohol and non-reactive solvent. The basic salt is dissolved in a binary solvent system consisting of water and/or an aliphatic alcohol. The cation of the basic salt is ammonium, antimony, iron, aluminium, lead or a metal of Groups I—A, II—A, I—B or II—B of the Periodic Table of Elements or a mixture thereof. The Periodic Table used in this specification is that of IUPAC (1965 revision). The anion of the basic salt is carboxylic acid having from about 1 to about 4 carbon atoms per molecule, a hydroxide or alkoxide or a mixture thereof. The preferred neutralizing agent is a metal acetate, more preferably zinc acetate. Sufficient metal salt of the carboxylic acid is added to the solution of the acid form of the elastomeric polymer to effect neutralization. It is preferable to neutralize at least 95% of the acid groups, more preferably 98%, most preferably 100%. Zinc acetate is preferred for sulfonated EPDM terpolymers having at least 65 wt.% ethylene.

Examples of metal oxides useful in preparing metal sulfonates are MgO, CaO, BaO, ZnO, $Ag_2O$, $PbO_2$ and $Pb_3O_4$. Useful examples of metal hydroxides are NaOH, KOH, LiOH, $Mg(OH)_2$ and $Ba(OH)_2$. The resultant neutralized sulfonated polymer has a viscosity at 0.73 sec$^{-1}$ at 200°C. of $3 \times 10^4$ Pa.s to $5 \times 10^5$ Pa.s $3 \times 10^5$ poises to $5 \times 10^6$ poises), preferably of $3 \times 10^4$ Pa.s to $3 \times 10^5$ Pa.s ($3 \times 10^5$ poises to $3 \times 10^6$ poises) and more preferably $5 \times 10^4$ Pa.s to $3.0 \times 10^5$ Pa.s ($5 \times 10^5$ poises to $3.0 \times 10^6$ poises).

A means of characterizing the apparent molecular weight of a polymer involves the use of melt rheological measurements. For ionic polymers, this is the preferred method since solution techniques are difficult to interpret due to the complex nature of the ionic associations. Melt rheological measurements of apparent viscosity at a controlled temperature and shear rate can be used as a measure of apparent molecular weight of an ionic polymer. Although the exact relationship between melt viscosity and apparent molecular weight for these ionic systems is not known, for the purposes of

3

this invention the relationship will be assumed to be one of direct proportionality. Thus, in comparing two materials, the one with the higher melt viscosity will be associated with the higher apparent molecular weight.

The melt viscosity of the systems investigated were determined by the use of an Instron Capillary Rheometer. Generally, the melt viscosity measurements were made at a temperature of 200°C. and at various shear rates corresponding to crosshead speeds from .127 mm/min to 508 mm/min. The apparent viscosity at 200°C. and at a shear rate of .73 sec$^{-1}$ (.127 mm/min) is employed as a characterization parameter in this invention. A measure of the melt elasticity of a given system can also be obtained from these rheological measurements. A type of flow instability known as melt fracture is exhibited by many polymeric materials of high molecular weight. This phenomenon is shear sensitive and thus will generally exhibit itself at a given shear rate and temperature. The shear rate for the onset of melt fracture indicates the upper shear rate for processing a given material. This is used as a characterization parameter for compounds employed in extrusion processing.

The metal sulfonate containing polymers at the higher sulfonate levels possess extremely high melt viscosities and are thereby difficult to process. The addition of ionic group plasticizers markedly reduces melt viscosity and frequently enhances physical properties.

To the neutralized sulfonated elastomeric polymer is added, in either solution or to the crumb of the acid form of the sulfonated elastomeric polymer, a preferential plasticizer which preferably has a melting point of at least 25°C and which may be a carboxylic acid having 5 to 30 carbon atoms per molecule, preferably 8 to 22 carbon atoms per molecule, or salts of these carboxylic acids wherein the metal ion of the salt is preferably that of aluminium, iron, antimony, lead or a metal of Groups I—A, II—A, I—B or II—B of the Periodic Table of Elements or a mixture thereof. The carboxylic acids may be lauric, myristic, palmitic, or stearic acids or a mixture thereof; or salts thereof e.g. zinc stearate, magnesium stearate, or zinc laurate.

The preferential plasticizer is incorporated into the neutralized sulfonated elastomeric polymer at 3 to 60, preferably 5 to 40, more preferably 8 to 40 parts by weight per 100 parts by weight of the sulfonated polymer.

The metallic salt of the fatty acid can also be used as neutralizing agent. In the case of the neutralizing agent and plasticizer being the identical chemical species, additional metallic salt may be added over the required levels of neutralization. Alternative preferential plasticizers are organic esters, phenols, phosphates, (e.g. trialkyl phosphates), alcohols, amines, amides, ammonium and amine salts of carboxylic acids or a mixture thereof. The preferred plasticizers are a fatty acid, or a metallic salt of a fatty acid or a mixture thereof. The resultant neutralized sulfonated élastomeric polymer with preferential plasticizer is isolated from the solution by conventional steam stripping and filtration. The preferred preferential plasticizers for sulfonated EPDM terpolymers having more than 65 wt.% ethylene are zinc salts of carboxylic acids or rosin acids or amides having 10 to 30 carbon atoms per molecule, preferably 12 to 22 carbon atoms, for example zinc stearate or stearamide.

The resultant neutralized and plasticized sulfonated elastomer has a viscosity at 200°C. and a shear rate of .73 sec$^{-1}$ of $5 \times 10^3$ Pa.s to $1 \times 10^5$ Pa.s ($5 \times 10^4$ poise to $1 \times 10^6$ poise), preferably of $5 \times 10^3$ Pas to $8 \times 10^4$ Pas ($5 \times 10^4$ poise to $8 \times 10^5$ poise) and more preferably of $8 \times 10^3$ Pas to $8 \times 10^4$ Pas ($8 \times 10^4$ poise to $8 \times 10^5$ poise).

The neutralized sulfonated elastomeric polymer is blended with a filler and a non-polar backbone process oil by techniques well-known in the art. For example, the blend composition can be compounded on a two-roll mill. Other methods known in the art which are suitable for making these compositions include those methods employed in the plastic and elastomer industries for mixing polymer systems. An excellent polymer blend composition of this invention can be obtained through the use of a high shear batch intensive mixer called the Banbury. Alternatively, economic advantages in terms of time and labor savings can be obtained through the use of a Farrel Continuous Mixer, a twin screw extruder, or tandem extrusion techniques which are continuous mixing types of equipment. The Banbury mixing device is the preferred batch type mixer, and the twin screw extruder is the preferred continuous mixer. (The word "Farrel" is a registered Trade Mark at least in the United Kingdom.)

The fillers employed in the present invention may be ground calcium carbonate, water precipitated calcium carbonate, amorphous silica, delaminated, calcined or hydrated clays, aluminium silicate, calcium silicate, magnesium silicate, or a mixture thereof. These fillers are incorporated into the blend composition at 25 to 350 parts by weight, preferably at 50 to 350 and more preferably at 50 to 300 parts by weight per 100 parts by weight of polymer. Typically, these fillers have a particle size of 0.03 to 20 microns, preferably 0.3 to 10, and more preferably 0.5 to 10. The oil absorption as measured by grams of oil absorbed by 100 grams of filler is 10 to 100, preferably 10 to 85 and more preferably 10 to 75. Typical fillers employed in this invention are illustrated in Table I.

The amorphous silica fillers employed in the present invention are restricted to a selected range of particle size which is less than 2 microns, preferably less than 1.75 microns. The filler can be treated or untreated. Typical amorphous silica fillers employed in this invention are:

| Amorphous Silica Filler | Particle Size (Microns) | Gardner-Coleman Oil Absorption |
|---|---|---|
| Imsil A—108 (Illinois Mineral Co.) | about 1.1 avg. (90% less than 5) | 30 |
| Imsil A—10 | 1.55 microns | 30 |

## TABLE I

| Filler | Code No | Oil Absorption grams of oil/ 100 grams of filler | Specific Gravity | Avg. Particle Size Micron | pH |
|---|---|---|---|---|---|
| Calcium carbonate ground | Atomite | 15 | 2.71 | | 9.3 |
| Calcium carbonate precipitated | Purecal U | 35 | 2.65 | .03—.04 | 9.3 |
| Delaminated clay | Polyfill XB | 30 | 2.61 | 4.5 | 6.5—7.5 |
| Hydrated clay | Suprex | | 2.6 | 2 | 4.0 |
| Calcined clay | Icecap K | 50—55 | 2.63 | 1 | 5.0—6.0 |
| Talc magnesium silicate | Mistron Vapor | 60—70 | 2.75 | 2 | 9.0—7.5 |

(The word "Mistron" is a registered Trade Mark at least in the United Kingdom).

The oils employed in the present invention are non-polar process oils having less than 2 wt.% polar type compounds as measured by molecular type clay gel analysis. These oils may be paraffinics ASTM Type 104B as defined in ASTM—D—2226—70, aromatics ASM Type 102 or naphthenics ASTM Type 104A, wherein the oil has a flash point by the Cleveland open cup of at least 177°C., a pour point of less than 4.4°C., a viscosity of 70 to 3000 sus's at 38°C. and a number average molecular weight of 300 to 1000, and more preferably 300 to 750. Mixtures of such oils may be used, if desired. The preferred process oils are paraffinics. Table IIA illustrates typical oils encompassed by the scope of this invention.

The oils are incorporated into the blend composition at a concentration level of 5 to 200, e.g. 25 to 200 parts by weight preferably at 25 to 150 parts by weight and more preferably at 50 to 150 parts by weight per 100 parts by weight of polymer.

## TABLE IIA

| Type Oil | Oil Code No. | Viscosity sus | Mn | % Polars | % Aromatic | % Saturates |
|---|---|---|---|---|---|---|
| Paraffinic | Sunpar 115 | 155 | 400 | 0.3 | 12.7 | 87.0 |
| Paraffinic | Sunpar 180 | 750 | 570 | 0.7 | 17.0 | 82.3 |
| Paraffinic | Sunpar 2280 | 2907 | 720 | 1.5 | 22.0 | 76.5 |
| Aromatic | Flexon 340 | 120 | — | 1.3 | 70.3 | 28.4 |
| Naphthenic | Flexon 765 | 505 | — | 0.9 | 20.8 | 78.3 |

The word "Flexon" is a registered Trade Mark at least in the United Kingdom.

The filler to oil weight ratio in the present application is critical and must be from 0.6:1 to 4.0:1, preferably 0.75:1 to 1.25:1 for an injection molding compound and for an extrusion compound the filler to oil ratio should be from 1.25:1 to 4.0:1, preferably 1.25:1 to 3.0:1, and more preferably 1.25:1 to 2.5:1.

Various other additives can be incorporated into the blend compositions to improve the physical properties, the appearance, the chemical properties of the formed elastomeric article or to modify the processability of the blend compositions.

A crystalline polyolefinic thermoplastic preferably has an $\overline{Mn}$ of at least 5000 and can be incorporated into the blend composition in minor proportions as a means of modification of the rheological properties of the blend compositions as well as the stiffness of the elastomeric article. Typically, the crystalline polyolefinic thermoplastic is added to the blend composition at a concentration level of up to 100 parts by weight per hundred parts by weight of sulphonated polymer, preferably up to 75; and more preferably up to 50 parts by weight per 100 parts by weight of polymer.

The crystalline polyolefin is characterized as a polymer of an alpha-olefin having a molecular weight of at least 20,000. This material comprises substantially an olefin but may incorporate other monomers, for example, vinyl acetate, acrylic acid, methyl acrylate, ethyl acrylate, sodium acrylate, methyl methacrylate, ethyl methacrylate, methacrylic acid, sodium methacrylate, etc. The preferred polyolefins are polymers of $C_2$ to $C_4$ alpha-olefins. More preferably, the polyolefins are polyethylene, polybutene, polypropylene, or ethylene-propylene copolymers. It is critical that the crystalline polyolefin have a degree of crystallinity of at least 25% and preferably at least 40%.

Both high and low density polyethylene are within the scope of the invention. For example, polyethylenes having a density from .90 to .97 gms/cc are generally included. Polypropylene polymers having intermediate and high densities are the preferred examples of the polypropylene materials useful in the invention. These materials will have a density from .88 to .925 gms/cc. The polyethylene or polypropylene can also be combined as copolymers thereof so long as adequate crystallinity is obtained in said combination. Thus, block copolymers wherein polyethylene or polypropylene is present in crystalline form are effective.

Zinc oxide can be incorporated into the blend as a whitening pigment as well as a means for improving the ionic bonding force between the sulfonate groups in the sulfonated elastomeric polymer. The zinc oxide is incorporated into the blend composition at a concentration level of up to 25 parts by weight, preferably up to 15 parts by weight based on 100 parts by weight of sulphonated polymer. Alternatively, a Rutile or Anatase titanium dioxide can be employed as a whitening pigment.

A metallic hydroxide can be incorporated into the blend composition as a means of further neutralizing any residual free acid in the elastomeric compositions. The metallic hydroxide is incorporated at a concentration level of about less than 5.0 parts per hundred based on 100 parts of the neutralized sulfonated elastomeric polymer, wherein the metal ion of the metallic hydroxide may be a metal of Group II—A of the Periodic Table of Elements such as barium, calcium, or magnesium.

A lubricant can be employed in the blend composition at a concentration level of up to 20 parts by weight, preferably up to 15 parts by weight per hundred parts by weight of the neutralised sulphonated elastomeric polymer. The lubricants of the present invention are nonpolar paraffinic hydrocarbon waxes having a softening point of about 57°C to about 104°C, more preferably 66°C to 93°C, wherein the wax has a number average molecular weight of 1000 to 4000, more preferably 1500 to 35000, and less than 2 wt.% polar constituents. These lubricants modify the rheological properties of the composition, improve the processability in forming the elastomeric article. Alternatively, amorphous polypropylene can be used as a lubricant.

Additionally, reinforcing fillers can be added as additives to the blends of sulfonated polymers, filler and oil, and the reinforcing filler may be for example carbon black, or calcium silicate or a mixture thereof. These reinforcing agents are generally characterized as having particle sizes below 0.1 microns and oil absorption above about 100. These reinforcing fillers are incorporated in the blend composition at concentrations of up to 50 parts by weight, preferably up to 25 parts by weight per 100 parts by weight of sulfonated polymer. The weight ratio of filler to reinforcing filler is at least 1:1 preferably 2:1, and more preferably 3:1.

Carbon blacks employable in the blend compositions range widely in physical and chemical properties. Physically, they vary in average particle size, particle size distribution, specific surface area, porosity of surface, and the tendency of the individual primary particles to be associated in chain-like structure. Chemically, they vary in the population and nature of oxygenated structures combined with their surface. Typical carbon blacks employed in this invention are illustrated in Table IIB.

These carbon black fillers may be blended into the blend composition at 1 to 60 parts by weight, preferably at 2 to 50 parts by weight and more preferably at 3 to 30 parts by weight per 100 parts by weight.

It is observed in these compounds if the carbon black is increased to a very high level (i.e., >100 pts. or so) than the resulting fabricated products exhibits a pronounced marking; i.e., a characteristic whereby a fabricated object will impart a black mark when rubbed on a smooth light surface. Therefore systems containing high levels of carbon black are not desired.

The mixture of non-polar process oil, inorganic filler and carbon black incorporated into the blend compositions of the present invention, in conjunction with the type of elastomeric polymer, the degree of sulfonation, and the metal cation of the neutralized sulfonated elastomeric polymer, and the plasticizer give materials processable by extrusion or injection molding processes into elastomeric articles having the desirable physical and rheological properties as well as improved weathering stability and compression set properties.

TABLE IIB

| Carbon Black | Type | Nigrometer Index | Sp. Surface Area, $m^2/g$ | EM Diameter (dm) Å | Volatile % | pH | Total Acids meq/g |
|---|---|---|---|---|---|---|---|
| Black Pearls 46 | Channel | 65 | 800 | 130 | 14.0 | 3.0 | 2.42 |
| Black Pearls 74 | Channel | 74 | 332 | 170 | 5.0 | 5.0 | 0.95 |
| Spheron 9 | Channel | 85 | 105 | 240 | 5.0 | 5.0 | 0.94 |
| Vulcan 9 | Oil Furnace (SAF) | 86 | 124 | 200 | 1.5 | 8.5 | 0.84 |
| Vulcan 3 | Oil Furnace (HAF) | 90 | 74 | 290 | 1.0 | 8.5 | 0.68 |
| Regan 330 | Low Structure Oil Furnace | 84.5 | — | 240 | — | 8.5 | 0.42 |
| Sterling S | Gas Furnace | 99 | 23 | 800 | 1.0 | 9.5 | 0.18 |
| Sterling FT | Thermal (FT) | 107 | 13 | 1800 | 0.5 | 8.5 | 0.12 |
| Sterling MT | Thermal (MT) | 110 | 6· | 4700 | 0.5 | 8.5 | 0.10 |

(The words "Black Pearls", "Spheron", "Vulcan" and "Sterling" are registered Trade marks at least in the United Kingdom).

The advantages of both the rheological and physical properties of the blend compositions of the present invention can be more readily appreciated by reference to the following examples and tables. Unless otherwise specified, all measurements are in parts per hundred by weight.

PREPARATION I
*PREPARATION OF SULFONATED EPDM*

One hundred grams of an EPDM terpolymer Vistalon 2504—20 was dissolved under agitation in 1000 ml. of n-hexane at 40°C. The resultant cement was cooled to room temperature and 5.74 ml. of acetic anhydride (60.75 mmoles) was then added. While stirring the mixture, 2.1 ml. of 95% $H_2SO_4$ (37.5 mmoles) was added dropwise. The sulfonation reaction was quenched after 30 minutes with 150 ml. of isopropanol. The acid form of the sulfonated polymer was analyzed by Dietert Sulfur Analysis to have 33 meq. of $SO_3H$ groups per 100 grams of sulfonated polymer. To the quenched sulfonated cement was added with stirring for thirty minutes 25.6 grams (90 mmoles/100 grams of EPDM) of stearic acid. A solution of 9.87 grams (90 meq./100 g. of EPDM) of zinc acetate dihydrate dissolved in 25 ml. of distilled water was then added in the cement and the cement stirred for an additional 30 minutes. Antioxidant 2246 (0.5 grams) was then added to the cement. The resultant plasticized, neutralized sulfonated EPDM terpolymer was then isolated by steam stripping and drying on a rubber mill at 104°C., where in the sulfonated terpolymer has an apparent viscosity at 0.73 $sec^{-1}$ at 200°C. of about $3.3 \times 10^5$ poise. This material was incapable of being injection molded on a low pressure Desma machine equipped with a standard canvas footwear type mold.

EXAMPLE I
*LOW PRESSURE INJECTION MOLDABLE COMPOSITIONS*
A) *The Sulfonated EPDM Gum*

The sulfonated EPDM gum was prepared in an identical manner as described in Preparation I. Three compounds were prepared by combining A with the ingredient type and concentration as shown in Table III in a 60 cc. mixing chamber (manufactured by C. W. Brabender) attached to a Plasticorder and equipped with Banbury type rotors. The mixing chamber was heated to approximately 125—145°C. and an upside-down mix employed. This involved adding the filler, oil (if present) sulfonated polymer, and plastic (if present) sequentially. The rotor speed was set at 50 rpm and approximately 3 to 5 minutes after the addition of all ingredients, fluxing was indicated by the torque

# 0 002 347

chart of the Plasticorder. At approximately seven minutes into the mix cycle, the rotor speed was increased to 100 rpm and the mix dumped at approximately 10 minutes in the form of a coherent slab.

## TABLE III

### COMPOUNDS BASED ON SULFO-EPDM

| Sample | 1 | 2 | 3 |
|---|---|---|---|
| Ingredient | | | |
| A Sulfonated EPDM | 100 | 100 | 100 |
| Process Oil — Sunpar 2280 | | 50 | 85 |
| Polyethylene (HDPE) | 54 | | |
| Polyethylene (LDPE) | | 25 | |
| Calcium Carbonate (Atomite) | | 80 | |
| Calcium Carbonate (Purecal U) | | | 40 |
| Talc — Mistron Vapor | | 15 | |
| Paraffin Wax (F 3504) | | | 15 |
| Zinc Oxide (Protox 166) | 25 | 15 | 25 |
| Magnesium Hydroxide | 1.8 | 1.5 | .57 |

The fillers employed in these mixtures are described in Table I. Atomite is a natural ground calcium carbonate, Purecal U is a precipitated calcium carbonate, and the Mistron Vapor is a standard magnesium silicate. The process oil employed was Sunpar 2280, a paraffinic oil supplied by Sun Oil Co. The property characteristics of the oil are described in Table IIA. The high density polyethylene (HDPE) was supplied by Phillips and designated Marlex 6050 possessing an MFR of 6 while the low density polyethylene was LD—610 (Exxon) and had an M.I. of 30. (The word "Marlex" is a registered Trade Mark at least in the United Kingdom).

B) *Determination of Low Pressure Injection Moldability*

The compounds described in Part A were prepared in an effort to determine a criterion for fabrication on a low pressure injection molding machine such as a Desma or a Vulcaplast. (The word "Desma" is a registered Trade Mark at least in the United Kingdom). Compound number 1, a composition described in U.S. Patent Specification 3974240 and previously been observed to be injection moldable on a conventional (high pressure) injection molder. However, in a low pressure Desma injection molder equipped with a standard gated canvas sneaker mold, it was not possible to fill the mold over the available range of injection pressure, injection speed, and temperatures between 177°C. to 233°C. (350 to 450°F.). Compound 2 could only be molded at the maximum available injection pressure and at a temperature of at least 204°C. (400°F.). Thus, compound 2 was barely fabricable in a low pressure injection molder. Surprisingly, compound 3 was found to be readily moldable at the mid-range in injection pressure and at a temperature between 177°C. and 204°C.

Determination of the melt rheological characteristics of compounds 1, 2 and 3 indicated the criterion for low pressure injection moldability. The rheological measurements were determined on an Instron Capillary Rheometer (plunger diameter = 9.5 mm, capillary diameter = 1.27 mm and length to diameter ratio of capillary = 20). (The word "Instron" is a registered Trade Mark at least in the United Kingdom). At a temperature of 200°C., the apparent viscosity was determined at a range of steady shear rate values. Table IV shows this rheological data for the compounds described above.

8

TABLE IV

RHEOLOGY OF S—EPDM COMPOUNDS
APPARENT VISCOSITY × $10^{-5}$ Pa.s × $10^{-4}$ POISE AT 200°C

| Compound No. | 1 | 2 | 3 |
|---|---|---|---|
| Shear Rate (sec$^{-1}$) | | | |
| .74 | 31.1 | 8.3 | 3.2 |
| 7.4 | 11.1 | 2.4 | 1.4 |
| 74 | 3.6 | .82 | .43 |
| 294 | — | .40 | .20 |
| 740 | — | .24 | .12 |
| Melt Fracture Onset Shear Rate (sec$^{-1}$) | 294 | 1470 | 3000 |
| Injection (Low Pressure) Moldable | No | Marginal | Yes |

As shown in Table IV, the melt viscosities at 200°C. of the compounds differ substantially. However, the viscosity-shear rate functionality appears to be similar for the compounds. For example, the ratio of viscosity at .74 sec$^{-1}$ shear rate to that at 74 sec$^{-1}$ shear rate is approximately 9, 10 and 8 for compounds 1, 2 and 3 respectively. Thus specifying the viscosity at a given temperature and shear rate for a compound based on sulfo-EPDM specifies approximately the viscosity over a range of shear rates. Thus, it appears that specification of the viscosity at .74 sec$^{-1}$ shear rate would yield the criterion for injection moldability. Since compound 2 was barely injection (low pressure) moldable, the maximum viscosity at 200°C. and at .74 sec$^{-1}$ shear rate will be taken to be 8 × $10^3$ Pa.s (8 × $10^4$ poise). Several subsequent evaluations have indicated the criticality of this maximum viscosity value in terms of injection in low pressure equipment commonly employed by the canvas footwear industry.

EXAMPLE II

A) *Preparation of Sulfonated Elastomer*

Two EPDM terpolymers (V—2504 and V—2504—20) were sulfonated according to the identical procedure which consist of dissolving 500 grams of the terpolymer into 5000 ml. of hexane of 40°C for 5 hours with stirring. After cooling each cement to room temperature, 36.38 ml. of acetic anhydride was added. After stirring for 3 minutes, 13.33 ml. of 95% $H_2SO_4$ was added slowly (dropwise) to each solution and allowed to react for 30 minutes. Aliquots of these sulfonated elastomeric cements were taken, the acid form of the sulfonated elastomers was isolated, and Dietert Sulfur analysis was performed to determine the degree of sulfonation. The cements of the acid form of the sulfonated elastomers were simultaneously quenched and neutralized with a solution of 62.56 grams of zinc acetate in 640 ml. of methanol and 24 ml. of distilled water. The neutralization reaction was allowed to proceed for 30 minutes at which time 2.5 grams of Antioxidant 2246 (American Cyanamid) was added to the cement of each neutralized sulfonated elastomer. Each neutralized sulfonated elastomer was isolated from solution by steam stripping and subsequently drying on a steam heated rubber mill at 93°C. The neutralized sulfonated elastomers of V—2504 (A—1) and V—2504—20 (A—2) each have about 45 meq. of sulfonate groups per 100 grams of EPDM terpolymer. A—1 and A—2 were plasticized by adding a metal stearate, namely zinc stearate. To A—1 was added 30 parts by weight of zinc stearate per 100 parts of A—1. The resulting plasticized sulfonated polymer will be designated A—1—P. To A—2 was added 20 parts by weight of zinc stearate per 100 parts of A—2. This polymer will be designated A—2—P.

B) *Preparation of Compounds*

Two compounds were prepared from each of the neutralized sulfonated EPDM polymers described in part A and designated as A—1—P and A—2—P.A 60 cc. mixing chamber (manufactured by C. W. Brabender) attached to a Plasticorder and equipped with Banbury type rotors was employed. The mixing chamber was heated to approximately 125°C. and an upside down mix employed. This involved adding the filler, oil, and sulfonated polymer sequentially. The rotor speed was set at 50 rpm and 3 minutes after the addition of all ingredients, fluxing was indicated by the torque chart. At seven minutes into the mix cycle, the rotor rpm was raised to 100 and the mix dumped at approximately 10 minutes in the form of a coherent slab.

The filler employed in these mixes was a natural ground calcium carbonate supplied by Thompson, Weinman & Co. called Atomite. The process oil employed was Sunpar 180, a paraffinic oil supplied by Sun Oil Co. The property characteristics of the filler and oil have been described in Tables I and IIA respectively. The compositions of the compounds and their designation are shown in the Table V below.

Upon attempting to prepare these formulations with the unplasticized sulfonated polymers A—1 and A—2, it was observed that fluxing did not occur in the mixing chamber after 20 minutes and the resultant material dumped in the form of an incoherent powder. The dispersion of the filler was extremely poor and could not be fabricated by extrusion or injection molding. This illustrated the criticality of the plasticizer.

TABLE V

COMPOSITIONS

| Type | Sulfonated Polymer Level | Plasticizer Level Zinc Stearate (phr) | Filler (Atomite) Level | Oil (S—180) | Compound Designation |
|---|---|---|---|---|---|
| A—1 | 100 | 30 | 100 | 100 | 1 |
| A—1 | 100 | 30 | 150 | 75 | 3 |
| A—2 | 100 | 20 | 100 | 100 | 2 |
| A—2 | 100 | 20 | 150 | 75 | 4 |

C) *Rheological and Physical Properties*

The melt rheological characteristics of the neutralized sulfonated ethylene-propylene terpolymers and compounds derived therefrom were determined by measurements on an Instron Capillary Rheometer (plunger diameter = 9.5 mm, capillary diameter = 1.27 mm, length to diameter ratio of capillary =20). At a temperature of 200°C., the apparent viscosity was determined at a range of steady shear rate values. Table VI shows the rheological data for the gums and compounds described above. The physical properties of these materials are shown in Table VII.

TABLE VI

EXTRUSION OF SULFONATED EPDM COMPOSITIONS
APPARENT VISCOSITY (POISE $\times$ 10$^{-5}$) AT 200°C.

| Sample No. | A—1 | A—2 | A—1—P | A—2—P | 1 | 2 | 3 | 4 |
|---|---|---|---|---|---|---|---|---|
| Plasticizing | none | none | yes | yes | yes | yes | yes | yes |
| Compounding | none | none | none | none | 100 filler 100 oil | 100 100 | 150 75 | 150 filler 75 oil |
| Shear Rate (sec$^{-1}$) | | | | | | | | |
| .73 | | | 6.03 | 7.67 | .64 | .75 | 1.29 | 1.37 |
| 7.3 | | | 1.89 | 2.30 | .26 | .28 | .47 | .52 |
| 73. | | | .41 | .54 | .07 | .08 | .12 | .13 |
| 291 | | | .15 | .19 | .03 | .03 | .04 | .05 |
| 728 | | | .07 | .10 | .02 | .02 | .02 | .03 |
| Melt Fracture (sec$^{-1}$) | | | 291 | 146 | 1456 | 3000 | 1456 | 1456 |
| Injection Moldable At Low Pressure | none | none | none | none | good | good | poor | poor |

TABLE VII

PHYSICAL PROPERTIES OF COMPOUNDS

| Compound | 1 | 2 | 3 | 4 |
|---|---|---|---|---|
| Tensile Properties (R.T.) | | | | |
| 100% Mod. (psi) | 335 | 325 | 505 | 470 |
| (kg/cm²) | 23.45 | 22.75 | 35.35 | 32.90 |
| 300% Mod. (psi) | 545 | 519 | 712 | 627 |
| (kg./cm²) | 38.15 | 36.33 | 49.84 | 43.89 |
| Tensile Strength at break | 1564 | 1505 | 1452 | 1263 |
| Elongation at break (%) | 640 | 620 | 563 | 555 |
| Set at break (%) | 50 | 50 | 44 | 44 |
| Hardness (Shore A) | 65 | 63 | 72 | 71 |

This example illustrates some of the distinctive advantages of the compositions of the present invention over that in the prior art and the range of molecular weights of the starting material which can be employed in the present invention. First, the neutralized sulfonated polymers based on a precursor EPDM having a Mooney viscosity (1+8 min.) at 100°C. of 20 or 40 cannot be injection molded as shown in Table VI. Attempting to compound these materials with filler and oil results in an intractable material, i.e. non-processable by injection molding. Plasticizing these neutralized sulfonated polymers with a metal stearate (zinc stearate) results in materials which are relatively stiff and non-flexible and furthermore are not injection moldable on low pressure machines. The addition of a particular mineral filler, and process oil in the specified filler to oil ratio, in conjunction with the plasticizer has produced materials which exhibit flow characteristics necessary for low pressure injection molding. The criticality of the filler to oil ratio is illustrated in the rheological characteristics by the lack of melt strength and low viscosity exhibited in the compounds wherein the filler to oil ratio is 1 and the high viscosity and elasticity which preclude low pressure molding exhibited in the compounds wherein the filler to oil ratio is 2. The viscosity values for compounds 2 and 3 are just below the critical maximum described in Example I. Thus, the sulfonate level of approximately 45 meq per 100g EPDM, the Mooney viscosity (ML, 1+8, 100°C) of about 40 of the starting EPDM and the filler to oil ratio of about 1 are near the maximum limits necessary for producing a material which can be fabricated on a low pressure injection molding machine.

The physical properties exhibited by compounds 2 and 3 as shown in Table VII are excellent, illustrating that the Mooney viscosity of the starting EPDM in the range of 20 to 40 (ML, 1+8, 100°C) is operable.

EXAMPLE III

SULFONATED BUTYL COMPOUNDS

A) *Preparation of Sulfonated Butyl*

Exxon Butyl 365 having an unsaturation level of approximately 2.0 mole %, a Mooney viscosity (1+8) at 100°C of about 45 and a viscosity average molecular weight of approximately 350,000, 200g of which were dissolved in 3000 ml of hexane by heating to about 40°C. for 6 hours. The polymer cement was cooled to room temperature and 6.89 ml (72.9 mmoles) of acetic anhydride added and stirred for 5 minutes. Next, 2.52 ml. (45.0 mmoles) of 95% sulfuric acid was added dropwise and the solution stirred for an additional 30 minutes. A solution of 11.9g of zinc acetate in 4 ml. of dstilled water and 160 ml. of methanol was added to the sulfonated polymer in solution to terminate the sulfonation reaction and neutralize the acid moiety. The neutralized sulfonated Butyl polymer (A) was isolated by steam stripping and drying on a rubber mill. Dietert sulfur analysis indicated a sulfonation level of approximately 15 meq. per 100g of Butyl.

B) *Compound Formulations*

The neutralized sulfonated Butyl polymer (A) 100 parts by weight was combined with 150 parts by weight of a finely divided calcium carbonate (Atomite) and 75 parts by weight of a rubber process oil (Sunpar 180) by the procedure described in Example II—B. This compound was designated (B—1). The rheological properties of Samples A and B—1 are illustrated in Table VIII.

TABLE VIII

EXTRUSION OF SULFONATED BUTYL COMPOSITIONS
APPARENT VISCOSITY, Pa.s x $10^{-6}$ (POISE x $10^{-5}$), AT 200°C.

| Sample | A | B—1 | B—2 | B—3 |
|---|---|---|---|---|
| Extrusion Rate (sec$^{-1}$) | | | | |
| .73 | 8.08 | 5.21 | .96 | .86 |
| 7.3 | 1.75 | 1.30 | .34 | .22 |
| 73. | .30 | .34 | .10 | .09 |
| 291 | .10 | .14 | .05 | .04 |
| 728 | .05 | .08 | .03 | .02 |
| Melt Fracture | | | | |
| Shear Rate (sec$^{-1}$) | 7.3 | 14 | 728 | None |

The neutralized sulfonated Butyl polymer (A) 100 parts by weight was combined with 100 parts by weight of a finely divided calcium carbonate (Atomite), 25 parts by weight of a rubber process oil (Sunpar 180), 20 parts by weight of a low density polyethylene (LD 605, M.I. 7.5) and 20 parts by weight of zinc stearate by the procedure described in Example II—B. This compound was designated B—2.

The neutralized sulfonated Butyl polymer (A) 100 parts by weight was combined with 40 parts by weight of a finely divided calcium carbonate (Atomite), 30 parts by weight of a rubber process oil (Sunpar 180), 20 parts by weight of a low density polyethylene (LD 605, M.I. 7.5), and 20 parts by weight of zinc stearate by the procedures described in Example II—B. This compound was designated B—3.

TABLE IX

PHYSICAL PROPERTIES OF
SULFONATED BUTYL COMPOSITIONS

| Sample | B—1 | B—2 | B—3 |
|---|---|---|---|
| Tensile Properties | | | |
| 100% Mod (kg/cm²) | 6.1 | 21.4 | 15.5 |
| 300% Mod. (kg/cm²) | 12.3 | 29.5 | 25.0 |
| Tensile Strength (kg/cm²) | 58.4 | 65.7 | 80.8 |
| Elongation at break (%) | 1020 | 830 | 995 |
| Hardness (Shore A) | 43 | 64 | 53 |

This example illustrates several critical compositional variables associated with this invention. This example demonstrates that a hydrocarbon backbone other than EPDM, namely Butyl rubber can be employed in the present invention. Furthermore, at a sulfonate level of approximately 15 meq. per 100g Butyl, the resultant compositions prepared by the teachings of this invention possess excellent physical properties and flow properties. The necessity of employing a plasticizer is further illustrated by the

# 0 002 347

rheological data in Table VIII. Both the neat sulfonated Butvl gum (A) and a compound comprising the gum, process oil, and mineral filler (B—1) result in materials which are not extrudable or injection moldable due to both their high viscosity and high melt elasticity. However, employing the combination of plasticizer and compounding ingredients results in a material with markedly improved rheological characteristics which is extrudable. Furthermore, both the tensile modulus and compound hardness are substantially improved as shown in Table IX.

## EXAMPLE V

### A) Preparation of Sulfonated EPDM

An ethylene-propylene-ethylidene norbornene terpolymer (V—2504—20) described in Preparation I, 200g was dissolved in 2000 ml. of hexane. At room temperature, 6.89 ml. of acetic anhydride was added to the solution and stirred for 3 minutes. 2.52 ml. of 95% sulfuric acid was then added dropwise and allowed to react for 30 minutes. An aliquot of cement was taken and the polymer isolated for analysis by Dietert Sulfur. The reaction was simultaneously terminated and the acid neutralized by adding a solution of 11.58g of zinc acetate in 160 ml. of methanol and 4 ml. of distilled water. After 30 minutes, 1g of antioxidant 2246 was added and the solution allowed to stir for an additional 15 minutes. The neutralized sulfonated ethylene-propylene terpolymer (A) was isolated by steam stripping and drying on a rubber mill at 104°C. The Dietert Sulfur value indicated that 17 meq. of sulfonate had been incorporated per 100g of EPDM.

### B) Preparation of Compounds

Several compounds were prepared by the methods described in Example I. The compositions are shown in Table X.

TABLE X
COMPOSITIONS

| Sample | 1 | 2 | 3 | 4 |
|---|---|---|---|---|
| Ingredients | | | | |
| A | 100 | 100 | 100 | 100 |
| Calcium Carbonate (Atomite) | 150 | 50 | 50 | 50 |
| Process Oil (Sunpar 180) | 75 | 25 | 25 | 25 |
| Polyethylene (LD—400) | | 20 | | 20 |
| Zinc Stearate | | 20 | 20 | |

13

# 0 002 347

C) *Characteristics*

The extrusion characteristics of the compositions described in Part B of this Example were determined on an Instron Capillary Rheometer as described previously. The results are shown in Table XI.

TABLE XI

EXTRUSION OF MAGNESIUM NEUTRALIZED
SULFO-EPDM COMPOSITIONS

APPARENT VISCOSITY, Pa.s $\times 10^{-6}$ (POISE $\times 10^{-5}$), AT 200°C.

| Sample | A | 1 | 2 | 3 | 4 |
|---|---|---|---|---|---|
| Extrusion Rate (sec$^{-1}$) | | | | | |
| .73 | 32.5 | 9.2 | 1.2 | 1.2 | 10.0 |
| 7.3 | 5.58 | 1.8 | .55 | .59 | 1.96 |
| 73. | .88 | .30 | .17 | .18 | .35 |
| 291 | .26 | .10 | .07 | .08 | .12 |
| 728 | .13 | .05 | .04 | .04 | .06 |
| Melt Fracture | | | | | |
| Shear Rate (sec$^{-1}$) | 7.3 | 14 | 1456 | 1456 | 146 |

The magnesium neutralized sulfo EPDM (a) is completely intractable (not processable by extrusion or injection molding) as indicated by the data in Table XI. Compounding with mineral filler and oil alone (Sample No. 1) or in combination with low density polyethylene (Sample No. 4) results in some improvement; however, the high viscosity and high melt elasticity precludes these compositions from being extruded or injection molded. However, the critical combination (Sample No. 3) of mineral filler, process oil and plasticizer (namely zinc stearate) converts the intractable system into one possessing excellent flow characteristics. The non-criticality of the plastic is illustrated by comparing Samples 2 and 3. The influence of the plastic is shown by the physical properties in Table XII.

TABLE XII
TENSILE PROPERTIES

| Compound | A | 1 | 2 | 3 | 4 |
|---|---|---|---|---|---|
| 100% Mod. (kg/cm$^2$) | | 5.3 | 19.1 | 14.7 | 14.0 |
| 300% Mod. (kg/cm$^2$ | | 8.8 | 3.02 | 25.7 | 21.5 |
| Tensile Strength at Break (kg/cm$^2$) | 23.9 | 12.0 | 63.4 | 52.8 | 29.4 |
| Elongation at break (%) | 310 | 600 | 700 | 715 | 503 |
| Hardness (Shore A) | | 45 | 66 | 61 | 62 |

The physical properties as shown in Table XII illustrate the superiority of the compositions of the instant invention namely Sample 2 and 3. As shown, the presence of polyethylene in Sample 2 acts to increase the hardness and modulate the tensile strength and tensile modulus.

Surprisingly, the physical properties of the compositions of this invention are superior to the original neutralized sulfonated gum (Sample A). Hence, both the flow properties and physical properties are enhanced simultaneously.

14

This example further demonstrates the low sulfonate level which can be employed. Also, the use of different cations for netralization such as magnesium is illustrated.

EXAMPLE V

A) *Compound Preparation*

To 100 parts by weight of the sulfonated EPDM described in Example II, was added 85 parts by weight of process oil (Sunpar 180), 40 parts by weight of a mineral filler (calcium carbonate = Purecal U), 25 parts by weight of zinc oxide (Protox 166), 5 parts by weight of titanium dioxide, 15 parts by weight of wax (F—3504), 0.57 parts by weight of magnesium hydroxide, and 2 parts by weight of triethanolamine. This compound designated (VI—A) was prepared by mixing the ingredients in a 1—A Banbury for approximately 10 minutes, at which time the mix was dumped at approximately 149°C. The resultant material was then granulated.

B) *Shoe Molding*

Compound VI—A was injection molded on a Desman rotary footwear machine. The granulated feed was supplied to the reciprocating screw section of the machine which was heated to a temperature of approximately 196°C and injected into a footwear mold with a canvas covered last. The last was heated to approximately 66°C. The total cycle time for this operation was approximately 1 minute, however the injection time was only 10 to 20 seconds. Some 300 canvas sneakers in varying sizes were produced in this manner.

C) *Sneaker Evaluation*

The Textile Services Division of United States Testing Compound, Inc. was commissioned to evaluate the performance of the sneakers based on Sulfo-EPDM to commercially available materials. A triblock polymer of styrene-butadiene-styrene compounded for footwear applications and designated Kraton was evaluated along with a plasticized PVC compound and a cured rubber compound. The following tests were performed and the results herein described.

1. *Abrasion Resistance*

Specimens of the sole material of each sneaker were prepared and tested in accordance with ASTM—1630. The results of these tests were as follows:

ABRASION INDEX

| Sample | Run 1 | Run 2 | Run 3 | Average |
|---|---|---|---|---|
| Sulfo-EPDM Compound A | 72.3 | 58.4 | 48.2 | 59.6 |
| Vinyl | 45.3 | 44.9 | 42.7 | 44.3 |
| Kraton | 24.8 | 25.5 | 28.6 | 26.3 |
| Rubber | 39.0 | 40.7 | 38.0 | 39.2 |

The results indicate that the compound based on Sulfo-EPDM has a higher (better) abrasion index than that of plasticized Vinyl, Kraton, or cured rubber.

2. *Flex Resistance*

Specimens of the sole of each sample were prepared and tested in accordance with ASTM—D—1052 (Ross Flex), except that the aging temperature was reduced to 38°C.

The results of these tests were as follows:

| Sample | Cycles to Complete Failure (cracking) |
|---|---|
| A | No cut growth of either specimen at 100,000 cycles |
| Kraton | 76,000; 36,400 |
| Vinyl | No cut growth of either specimen at 100,000 cycles |
| Rubber | 27,400; 14,800 |

The results indicate a superiority of the compound based on Sulfo-EPDM over that of Kraton and cured rubber in terms of flex resistance.

3. *Low Temperature Flex*

One sneaker of each sample was placed in a cold chamber and the chamber temperature was lowered to and maintained at 0°F. for a period of 2 hours. At the end of this period and while at the test temperature, the sneakers were flexed manually to determine the effects of storage at this temperature. The test was repeated at −23°C. chamber temperature increments to a final temperature of −51°C.

The results of these tests were:

| Test Temperature, °C. | A | Vinyl | Kraton | Rubber |
|---|---|---|---|---|
| 0 | S | S | S | S |
| −23 | S | SLF | S | S |
| −29 | S | MLF | S | S |
| −34 | S | MLF | S | S |
| −40 | S | U | S | S |
| −46 | S | U | SLF | S |
| −51 | SLF | U | SLF | |

Code: S = Satisfactory flexibility
SLF = Slight loss in flexibility
MLF = Moderate loss in flexibility
U = Unsatisfactory (board-like)

These results indicate the superiority of the sulfonated EPDM based compound over Vinyl. Thus, in terms of overall flexibility as measured by the Ross Flex (3) and low temperature flex (4), the compound based on Sulfonated EPDM is superior to plasticized Vinyl, Kraton and cured rubber.

4. *Sole Hardness, Shore "A"*

Shore "A" Hardness readings were obtained at five areas of each sole, as received, that is, the surface was not buffed and the values included any inherent "skin" hardness. The results of these tests were as follows:

| Sample | Shore "A" Hardness | Average |
|---|---|---|
| A | 50—50—47—51—51 | 50.0 |
| Kraton | 50—50—50—52—50 | 50.0 |
| Vinyl | 67—72—72—63—65 | 67.6 |
| Rubber | 62—65—60—61—60 | 61.6 |

The compound based on Sulfonated EPDM (A) is similar in hardness to that of the Kraton while the Vinyl and cured rubber compounds are harder. The sulfonated EPDM compound (A) possesses a very desirable rubbery feel characteristic particularly with regard to the vinyl compound which is somewhat plastic like and stiff in nature.

5. *Coefficient of Friction*

A 15.25 cm (six inch) length of the sole of each sample, measured from the toe, was removed from the sneaker and used as the "sled" for the coefficient of friction test against waxed asphalt tile. Tests were conducted on an Instron Model TTC testing machine employing a 9.1 kgm (20 pound) range and a crosshead speed of 30.5 cm per minute. The sled weight was 20 pounds.

The static (initiate motion) and dynamic (maintain motion) coefficients of friction were calculated from the data:

### COEFFICIENT OF FRICTION

| Sample | Static | | Dynamic | |
|---|---|---|---|---|
| | Range | Average | Range | Average |
| A | .72—.77 | .74 | .70—.71 | .71 |
| Kraton | .49—.51 | .50 | .50—.51 | .51 |
| Vinyl | .55—.64 | .58 | .52—.63 | .56 |
| Rubber | .45—.46 | .46 | .41—.44 | .42 |

The coefficient of friction data indicate that the compound based on sulfonated EPDM has a higher static and dynamic coefficient of friction in comparison to Kraton, Vinyl and cured rubber. In a footwear sole application, this would provide better traction and stopping characteristics. This would be particularly advantageous on waxed floor surfaces and wet surfaces such as wet grass.

In general, the physical characteristics of the compound based on sulfonated EPDM is superior to those based on Kraton, plasticized Vinyl and cured rubber as illustrated in this example.

### EXAMPLE VI

A series of blend compositions were made from the plasticized, neutralized sulfonated EPDM terpolymer of Preparation I, a plurality of fillers, an oil, and a low density polyethylene resin having a melt index of 30 g/10 min. The components of the blend compositions were compounded on a Brabender batch mixer having Banbury type rotors, wherein the temperature of mixing was 125°C. The resultant stock was sheeted out on a two-roll mill at 125°C. The stocks as prepared above were analyzed for melt index, Shore A Hardness and tensile properties at room temperature. The melt index values (grams/10 minutes) were taken at 190°C. and under a constant stress of 17.6 kg/cm$^2$. The tensile properties were obtained on 5.1 cm x 5.1 cm x 0.5 cm. pads which were compression molded at 177°C. for approximately 5 minutes. Micro tensile dumbbells were die cut and tested on an Instron Tensile Tester at a crosshead speed of 5.1 cm./minute. The stress at 100% strain, 300% strain, and at break were recorded along with the total percent elongation at break.

Compositionally, the formulations shown in Table III contain 16.7% crystalline polyolefin (low density polyethylene), 16.7% process oil (Flexon 845), 33.3% neutralized and plasticized Sulfo EPDM gum and 33.3% of selected finely divided mineral fillers. These compositions exhibited relatively good melt flow behavior as indicated by the melt index values and reasonable tensile properties. The compounds were tough as indicated by the 100% moduli and exhibited hardness values similar to vulcanize rubber formulations. These blend compositions are ideally suited for injection molding screw driver handles.

This example illustrates that compounds based on Sulfo EPDM gum, process oil, crystalline polyolefin and finely divided fillers can be mixed in conventional equipment, and the resultant products do indeed exhibit good melt flow behavior and physical properties. Furthermore, the data illustrate the classes of mineral fillers that can be employed.

TABLE XIII

| Ingredient | 1 | 2 | 3 | 4 | 5 |
|---|---|---|---|---|---|
| Sulfo EPDM | 100 | | | | →|
| LDPE (LD—610) | 50 | | | | →|
| Oil (Flexon 845) | 50 | | | | →|
| Mg(OH)$_2$ | 2.5 | | | | →|
| Allied Whiting (CaCO$_3$) | 100 | | | | |
| Purecal U (CaCO$_3$) | | 100 | | | |
| Icecap K (Calcined Clay) | | | 100 | | |
| Dixie (Hydrated Clay, hard) | | | | 100 | |
| Paragon (Hydrated Clay, soft) | | | | | 100 |
| Hardness (Shore A) | 70 | 75 | 74 | 75 | 77 |
| Tensile Properties R.T. | | | | | |
| 100% Modulus, kg/cm$^2$ | 25.7 | 31.4 | 42.4 | 36.2 | 34.8 |
| 300% Modulus, kg/cm$^2$ | — | 37.4 | — | — | — |
| Tensile Strength at Break, kg/cm$^2$ | 29.8 | 42.4 | 38.0 | 39.0 | 37.0 |
| Elongation at Break, % | 233 | 420 | 130 | 210 | 260 |
| M.I. (190°C., 17.6 kg/cm$^2$) g/10 min. | 34.5 | 17.1 | 24.5 | 27.5 | 36.2 |

## EXAMPLE VII

A series of compounds were prepared based on a neutralized and plasticized Sulfo EPDM gum of Preparation I according to the procedure of Example I. These compounds were three component formulations comprising the Sulfo EPDM gum, process oil and mineral filler. This example is designed to show the effect of the filler to oil ratio and the total loading of filler and oil on the physical and flow properties of Sulfo EPDM based compounds. Filler to oil ratios from 1.5 to 3 were investigated as shown in Table IV. The filler type (calcium carbonate-Purecal U) and process oil type (paraffinic-Sunpar 2280) were fixed. At a constant filler to oil ratio (2), the total loading or degree of extension was varied. For this study, compounds were prepared containing from approximately 18% to 40% neutralized and plasticized Sulfo EPDM gum. The physical properties and flow properties of these systems are shown in Table V. All of the compounds were prepared and analyzed according to the procedures described in Preparation I.

The effect of change in filler to oil ratio on the physical and flow characteristics of the compounds based on Sulfo EPDM is illustrated in Table XIV. An increase in the filler to oil ratio results in an increase in compound hardness, an increase in 100% and 300% tensile moduli; a decrease in tensile strength at break, elongation at break and melt flow as indicated by melt index. It should be mentioned that all of the compounds shown in Table XIV are readily prepared by conventional compounding techniques and exhibit good melt flow characteristics and a spectrum of physical properties which are desirable in many applications such as laboratory tubing.

The data presented in Table XV illustrate several important characteristics associated with compounding Sulfo EPDM systems. At a constant filler to oil ratio of 2, increasing the degree of loading from 60 wt.% to approximately 80 wt.% reduces the tensile modulus and tensile strength at break and results in an increase in melt flow as indicated by melt index. As evidenced by compound 4 in Table V, the Sulfo EPDM gum can be extended by mineral filler and process oil to a high degree and yet the resultant system exhibits excellent flow characteristics and useful physical properties. As evidenced by the tensile set at break, this compound is highly elastic and rubbery in nature. it is also apparent that for compounds based on neutralized and plasticized Sulfo EPDM having gum contents lower than approximately 15% the resultant physical properties would be unacceptable. On the other hand,

18

**0 002 347**

compounds containing greater than approximately 40% Sulfo EPDM gum exhibit low melt flow in filler-oil type formulations and thus would be difficult to fabricate on conventional equipment.

This example has illustrated the effect of filler to oil ratio, and the degree of loading of the filler and oil on the physical properties and flow properties of the compounds based on Sulfo EPDM gum. The criticality of these compositional parameters on the scope of the compounds encompassed by this invention has been demonstrated.

TABLE XIV

EFFECT OF FILLER/OIL RATIO

| | Compounds | | | |
|---|---|---|---|---|
| Ingredients | 1 | 2 | 3 | 4 |
| Sulfo EPDM Gum | 100 | 100 | 100 | 100 |
| Sunpar 2280 Oil | 100 | 100 | 100 | 100 |
| Calcium Carbonate — Purecal U | 150 | 200 | 250 | 300 |
| Magnesium Hydroxide | 2 | 2 | 2 | 2 |
| Filler/Oil Radio | 1.5 | 2 | 2 | 2.5 |
| Tensile Properties R.T. | | | | |
|    100% Modulus, psi * | 210 | 225 | 291 | 329 |
|    300% Modulus, psi * | 281 | 307 | 357 | 406 |
|    Tensile Strength at Break, psi * | 706 | 582 | 490 | 437 |
|    Elongation at Break, % | 730 | 720 | 600 | 440 |
|    Set at Break, % | 44 | 40 | 50 | 30 |
| Melt Index | | | | |
|    190°C./17.6 kg/cm², g/10 minutes | 19.9 | 11.6 | 8.8 | 6.1 |

* the equivalent figure in $kg/cm^2$ can be obtained by multiplying by 0.07.

19

**0 002 347**

TABLE XV

EFFECT OF LOADING

| Ingredients | Compounds | | | | |
|---|---|---|---|---|---|
| | 1 | 2 | 3 | 4 | 5 |
| Sulfo EPDM Gum | 100 | 100 | 100 | 100 | 100 |
| Sunpar 2280 Oil | 60 | 75 | 100 | 125 | 150 |
| Calcium Carbonate — Purecal U | 120 | 150 | 200 | 250 | 300 |
| Magnesium Hydroxide | 2 | 2 | 2 | 2 | 2 |
| Gum Content wt.% | 35.5 | 30.6 | 24.9 | 21.0 | 18.1 |
| Tensile Properties, R.T. | | | | | |
| 100% Modulus, psi * | 339 | 246 | 225 | 217 | 198 |
| 300% Modulus, psi * | 475 | 356 | 307 | 311 | 307 |
| Tensile Strength at break, psi * | 1045 | 773 | 582 | 400 | 358 |
| Elongation at break, % | 677 | 690 | 720 | 500 | 460 |
| Set at Break, % | 62 | 40 | 40 | 30 | 24 |
| Melt Index | | | | | |
| 190°C., 17.6 kg/cm², g/10 min. | 3.5 | 3.6 | 11.6 | 15.9 | 30.0 |

* The equivalent figure in kg/cm² can be obtained by multiplying by 0.07.

## EXAMPLE VIII

This example illustrates some of the compositional requirements applied to developing a suitable formulation for a garden hose application. The Sulfo EPDM gum was that of Preparation I, and the compounding procedures and methods of analysis were also similar to those employed in Example I. Table XVI illustrates a series of compounds employing the Sulfo EPDM gum, process oil, mineral fillers and a process aid in the form of petroleum wax. The physical properties at both room temperature and 100°C. were determined. The results of this study were employed to select a composition which would be scaled up to a larger batch mixer and subsequently evaluated for garden hose application as further described in Example IX.

20

| | TABLE XVI | | | | | | | | | |
|---|---|---|---|---|---|---|---|---|---|---|
| | 1 | 2 | 3 | 4 | 5 | 6 | 7 | 8 | 9 | 10 |
| Filler/Oil Ratio = | 2 | 2 | 2 | 2 | 2 | 1.71 | 1.85 | 1.85 | 2 | 2/2 |
| Zn—S—EPT (201—S) | 25.0 | | | | | | | | | |
| Sunpar 2280 | 15.0 | 15.0 | 15.0 | 15.0 | 15.0 | 17.5 | 16.25 | 15.0 | 15.0 | 15.0 |
| Purecal U | 30.0 | 15.0 | 20.0 | 17.5 | 17.5 | 17.5 | 17.5 | 16.2 | 16.2 | 16.2 |
| Icecap K | — | 15.0 | 10.0 | 12.5 | 12.5 | 12.5 | 12.5 | 11.6 | 11.6 | 11.6 |
| Paraffin Wax — F—3504 | 2.5 | 2.5 | 2.5 | 2.5 | 3.75 | 2.5 | 2.5 | 2.5 | 2.5 | 2.5 |
| $Mg(OH)_2$ | 0.5 | 0.5 | 0.5 | 0.5 | 0.5 | 0.5 | 0.5 | 0.5 | 0.5 | 0.5 |
| ZnO | — | — | — | — | — | — | — | — | 2.5 | 5.0 |
| Mixing Head Temperature = | | | | | | | | | | |
|     Dump Temperature = C° | 132 | 133 | 137 | 140 | 138 | 137 | 138 | 135 | 137 | 138 |
|     Torque — (M-gr) | 5000 | 4000 | 4800 | 5000 | 4900 | 4700 | 4700 | 4200 | 4400 | 4800 |
| Rating of Melt Fracture | | | | | | | | | | |
|     @ 295 $sec^{-1}$ (No. 10 severe) | 9 | 6 | 7 | 10 | 9 | 4 | 3 | 5 | 8 | 8 |
|     T @ 0.88 $sec^{-1}$ | 3.5 | 2.4 | 3.0 | 3.4 | 3.0 | 2.3 | 2.3 | 2.5 | 3.2 | 3.1 |
| Melt Index — 190°C/17.6 $kg/cm^2$ | 2.20 | 3.87 | 3.06 | 1.99 | 3.40 | 5.94 | 5.40 | 4.43 | 2.89 | 2.77 |

TABLE XVI (Continued)

| | 1 | 2 | 3 | 4 | 5 | 6 | 7 | 8 | 9 | 10 |
|---|---|---|---|---|---|---|---|---|---|---|
| R.T. Tensiles | | | | | | | | | | |
| 100% Modulus | 335 | 397 | 367 | 354 | 370 | 377 | 390 | 390 | 435 | 445 |
| 300% Modulus | 456 | 545 | 525 | 525 | 525 | 510 | 525 | 525 | 590 | 605 |
| Tensile psi* | 1010 | 940 | 990 | 940 | 930 | 915 | 980 | 1000 | 1100 | 1030 |
| % Elongation | 690 | 610 | 660 | 630 | 635 | 620 | 660 | 630 | 645 | 620 |
| % Set | 55 | 50 | 65 | 65 | 70 | 70 | 80 | 80 | 80 | 85 |
| Hardness Rex. | 67 | 68 | 64 | 62 | 65 | 65 | 65 | 65 | 67 | 66 |
| 100°C Tensile | | | | | | | | | | |
| Tensile psi* | 253 | 95 | 255 | 274 | 247 | 137 | 153 | 114 | 296 | 297 |
| % Elongation | 840 | 730 | 730 | 720 | 700 | 690 | 620 | 800 | 650 | 610 |
| % Set | 125 | 150 | 90 | 90 | 100 | 125 | 70 | 130 | 100 | 60 |

* The equivalent figure in kg/cm² can be obtained by multiplying by 0.07.

### EXAMPLE IX

The following compound based on Sulfo EPDM gum of Preparation I was prepared in a 1A Banbury.

| Ingredients | Composition |
|---|---|
| Sulfo EPDM | 100 |
| Sunpar 2280 Oil | 63 |
| Purecal U | 67 |
| Icecap K | 48 |
| Paraffin Wax — F3504 | 10 |
| Zinc Oxide (Protox 166) | 5 |
| Magnesium Hydroxide | 2 |
| Irganox 1010 | .5 |

(The word "Irganox" is a registered Trade Mark at least in the United Kingdom). Fourteen batches of 14.9 kgm. each were prepared in the 1A Banbury with the following mixing procedure.

### MIXING CYCLE

| Ingredients | Time Min. | Torque Kw | Temp. °C. | Rotor Speed RPM |
|---|---|---|---|---|
| All fillers, oil, Irganox 1010 | 0 | 0 | 60 | 75 |
| 1/2 Polymer | 1 | 0 | 63 | |
| Wax, 1/2 Polymer | 1 | 0 | 63 | 75 |
| | 4 | 5 | 68 | 75 |
| Magnesium Hydroxide, Zinc Oxide | 4-1/2 | 10 | 74 | 75 |
| | 5 | 30 | 82 | 75 |
| | 6 | 75 | 154 | 150 |
| Dump Drop Temperature | 6-1/2 | 60 | 179 174°C. | |

The compound appeared to be well mixed. After cooling, the material was granulated in a Cumberland grinder fitted with a 9.6 mm. screen. This compound has been further scaled to a 3D Banbury size which produces approximately at 78.9 kgm. per shot. Thus, a compound based on the invention has been demonstrated on a realistic commercial scale atd least in terms of mixing and compound preparation.

This compound was evaluated for a conventional reinforced garden hose application. The inner tube was fabricated on a 50.8 mm. 24:1 L/D vented extruder equipment.

23

## 0 002 347

The die size was .938 and pin size was .719. The temperature profile set up in the extruder was as follows:

| Zone | Temperature °C |
|------|----------------|
| 1 | 204 |
| 2 | 210 |
| 3 | 210 |
| 4 | 216 |
| 5 | 216 |
| 6 | 227 |
| 7 | 227 |

After stabilization the screw speed was set at 81 rpm and the drive motor drew 25 amps. The head pressure was 98 kg/cm$^2$ and melt temperature was in the range of 213°C. to 216°C. The head size was .766 × 1.047 and by draw down the resultant tube was sized to be .625 × .750. A check of the throughput rate at 100 rpm screw speed indicated 81 kgm./hr. which is comparable to commercial vinyl garden hose extrusion rates. Approximately, 915 cm. of high performance garden hose was made.

A polyester reinforcement was then woven onto the tube employing conventional equipment. This reinforced tube was passed through an infrared heater and an outer tube of the same compound was extruded onto it by the use of a crosshead die of size .850 with pin size of .800. A similar temperature profile was set on the extruder with the following conditions: screw speed — 66 rpm; amps — 22; FPM —43; head pressure — 133.6 kg/cm$^2$; stock temp. — 227°C. The cover thickness was measured at .047 with covered O.D. of .609 × .844. The covering operation was effected at an output rate of approximately 72 kgm/hr.

This evaluation has demonstrated several qualities associated with the compositions of this invention. The formulations which have been described possess the rubbery characteristics normally associated with cross-linked elastomers. These compositions can be prepared on commercial mixing equipment, and the resultant material can be fabricated on commercial plastics and rubber-type extrusion equipment at commercial rates. The desirable rubbery characteristics are attributable to the unique ionic associations in the Sulfo EPDM base gum. These desirable characteristics have been derived without the costly and time consuming post vulcanization steps.

Preparation II

A series of zinc sulfonate containing EPDM's varying in sulfonate content were prepared from a 20 Mooney (ML, 1+8, 100°C.) EPDM containing about 70 weight % ethylene and about 5 weight % 5-ethylidene-2-norbornene. The general procedure for sulfonation, neutralization, and product isolation described in Preparation I was followed for these preparations.

Table XVII details the compositions of the zinc sulfonate EPDM's, their tensile properties at room temperature and 70°C., and their melt indexes.

The tensile properties of these high (70 weight %) ethylene content zinc sulfonate EPDM's are significantly better than the corresponding gums of lower (50 weight %) ethylene (cf Preparation I). However, the melt viscosities of these ionomers are very high and, of course, processing is difficult. Processability can be improved through a reduction in sulfonate content for these high ethylene content copolymers. At equivalent tensile properties the high ethylene content gums possess lower viscosity than the lower ethylene content gums; however, to achieve adequate melt processability it is desirable to have a melt index at 190°C and 17.6 kg/cm$^2$ of at least about 5 and preferably at least about 10 grams/10 minutes. Even at very low sulfonate contents the unplasticized high ethylene ionomers are not sufficiently low in melt viscosity to meet these limitations.

24

TABLE XVII

ZINC SULFONATE EPDM (70 WEIGHT % ETHYLENE) PROPERTIES
AS A FUNCTION OF SULFONATE CONTENT

| Example | Sulfonate Content meq/100 Polymer | Melt Index (190°C, 250 17.6 kg/cm²) g/10 minutes | Room Temperature | | | 70°C | | |
|---|---|---|---|---|---|---|---|---|
| | | | 300% Modulus, psi* | Tensile Strength, psi* | Elongation, % | 300% Modulus, psi* | Tensile Stregnth, psi* | Elongation % |
| 5A | 13.8 | 0.56 | 650 | 2935 | 620 | 100 | 100 | 450 |
| 5B | 25.0 | 0.04 | 1270 | 6060 | 530 | 450 | 550 | 360 |
| 5C | 33.4 | 0.015 | 1930 | 6250 | 470 | 760 | 880 | 345 |
| 5D | 40.9 | 0.008 | 3220 | 5830 | 370 | 700 | 1000 | 360. |

* The equivalent figure in kg/cm² can be obtained by multiplying by 0.07.

# 0 002 347

### Preparation III

The zinc sulfonate EPDM's of 70 weight % ethylene content described in Preparation II were mixed with various levels of zinc stearate.

Table XVIII lists the compositions, tensile properties and melt indexes of the plasticized compositions.

Just as with the lower ethylene EPDM's substantial reductions in melt viscosity were obtained through the use of zinc stearate plasticizer. And yet the very high room temperature tensile strengths of the unplasticized gums were not adversely affected and the 70°C. tensile strengths were significantly improved. The tensile properties of the zinc stearate plasticized zinc sulfonate high ethylene EPDM's are substantially better than the corresponding plasticized gums from low ethylene EPDM's.

## TABLE XVIII

### EFFECT OF SULFONATE CONTENT AND ZINC STEARATE ON THE FLOW AND TENSILE PROPERTIES OF ZINC SULFONATE EPDM (70 WEIGHT % ETHYLENE)

| Base Polymer, Example | Sulfonate Content, meq/ 100g Polymer | Zinc Stearate, g/ 100g Polymer | Melt Index (190°C, 17.6 kg/cm² g/10 min | Room Temperature | | | 70°C | | |
|---|---|---|---|---|---|---|---|---|---|
| | | | | 300% Modulus psi* | Tensile Strength psi* | Elong. % | 300% Modulus psi* | Tensile Strength psi* | Elong. % |
| 5A | 13.8 | 0 | 0.56 | 650 | 2935 | 620 | 100 | 100 | 450 |
| | | 2.1 | 0.91 | 670 | 3570 | 615 | 140 | 155 | 430 |
| | | 4.3 | 2.4 | 700 | 3730 | 620 | 140 | 140 | 410 |
| | | 8.6 | 5.2 | 770 | 3670 | 605 | 140 | 140 | 355 |
| | | 12.9 | 7.3 | 770 | 4000 | 630 | 160 | 170 | 390 |
| | | 17.2 | 10.3 | 790 | 3730 | 630 | 180 | 190 | 350 |
| | | 21.5 | 13.2 | 760 | 3560 | 630 | 180 | 190 | 360 |
| 5B | 25.0 | 0 | 0.04 | 1270 | 6060 | 530 | 450 | 550 | 360 |
| | | 3.8 | 0.10 | 1320 | 6680 | 520 | 460 | 770 | 470 |
| | | 7.5 | 0.29 | 1500 | 7030 | 520 | 450 | 800 | 500 |
| | | 15.0 | 1.3 | 1520 | 6350 | 510 | 410 | 860 | 580 |
| | | 22.6 | 2.8 | 1580 | 6340 | 530 | 430 | 1030 | 630 |
| | | 30.0 | 5.9 | 1500 | 6310 | 550 | 420 | 1070 | 660 |
| | | 37.6 | 9.1 | 1430 | 6090 | 560 | 440 | 1150 | 690 |

0 002 347

TABLE XVIII (Continued)

EFFECT OF SULFONATE CONTENT AND ZINC STEARATE ON THE FLOW AND
TENSILE PROPERTIES OF ZINC SULFONATE EPDM (70 WEIGHT % ETHYLENE)

| Base Polymer, Example | Sulfonate Content, meq/ 100 g Polymer | Zinc Stearate, g/ 100 g Polymer | Melt Index (190°C, 17.6 kg/cm²) g/10 min | Room Temperature | | | 70°C | | |
|---|---|---|---|---|---|---|---|---|---|
| | | | | 300% Modulus psi* | Tensile Strength psi* | Elong. % | 300% Modulus psi* | Tensile Strength psi* | Elong. % |
| 5C | 33.4 | 0 | 0.015 | 1930 | 6250 | 470 | 760 | 880 | 345 |
| | | 4.9 | 0.03 | 1665 | 6370 | 480 | 650 | 1330 | 500 |
| | | 9.9 | 0.10 | 1905 | 6790 | 470 | 615 | 1740 | 620 |
| | | 19.8 | 0.47 | 2000 | 6480 | 475 | 620 | 2160 | 650 |
| | | 29.7 | 1.7 | 1730 | 6050 | 530 | 550 | 2665 | 780 |
| | | 39.5 | 3.7 | 1910 | 6500 | 510 | 590 | 2780 | 760 |
| | | 49.4 | 8.1 | 1770 | 5730 | 530 | 550 | 2460 | 780 |
| 5D | 40.9 | 0 | 0.008 | 3220 | 5830 | 370 | 770 | 1000 | 360 |
| | | 6.0 | 0.009 | 2460 | 6070 | 420 | 740 | 1130 | 410 |
| | | 11.9 | 0.04 | 2550 | 5190 | 400 | 780 | 1380 | 460 |
| | | 24.0 | 0.35 | 2830 | 6380 | 440 | 760 | 2700 | 660 |
| | | 35.8 | 1.5 | 2750 | 6380 | 460 | 680 | 2980 | 710 |
| | | 47.7 | 4.6 | 2590 | 5840 | 460 | 715 | 2560 | 645 |
| | | 59.7 | 9.0 | 2370 | 6010 | 490 | 660 | 2620 | 690 |

* The equivalent figure in kg/cm² can be obtained by multiplying by 0.07.

**0 002 347**

### EXAMPLE X

Compounds A, B and C were made by compounding the ingredients in a "B" Banbury for about 4—10 minutes to a temperature of about 160°C until a homogeneous mixture had been realized. The samples were injected molded at 200°C for samples A and B and at 221°C for C. Compression molding of compounds A and B were done at 177°C for 5 minutes. The physical and rheological properties of these injection and compression molded samples are summarized in Table XIX.

The compounds tested in the above examples demonstrate improvements realized with the preferred amorphous silica over other mineral fillers such as clay and calcium carbonate. While maintaining good resilience and mechanical properties such as tensile and tear the amorphous silica compounds exhibit reduced melt viscosity (better flow), improved adhesion, reduced aqueous uptake and superior surface shine after processing operations such as molding and extrusion.

### TABLE XIX

|  | IVA | IVB | IVC |
|---|---|---|---|
| Thionic 303 | 100 | 100 | — |
| Thionic 304 | — | — | 100 |
| ZnSt (USP) | 10 | 18 | 13 |
| Imsil A 108, Amorph. Silica | 150 | 150 | — |
| Tufflo 6056 Oil | 85 | 125 | — |
| ZnO (Protox 166) | 6 | — | — |
| LD 600, LDPE | 25 | 30 | — |
| CD 460, PP | — | — | 60 |
| $TiO_2$, Tipure R101 | — | 4 | — |
| Irganox 1010 | 0.35 | 0.4 | 0.2 |

(The word "Tufflo" is a registered Trade Mark at least in the United Kingdom.)

29

TABLE XIX (Continued)

| Properties | IVA | | IVB | | IVC |
| --- | --- | --- | --- | --- | --- |
| | Inj. Molded | Comp. Molded | Inj. Molded | Comp. Molded | Inj. Molded |
| R.T. Shore A | 68 | 68 | 61 | 61 | ·96 |
| R.T. Shore D (—/15 sec) | — | — | — | — | 46/40 |
| R.T. Tensile, psi * | | | | | |
| 100% | 727 | 344 | 314 | 266 | 2150 |
| Break | 842 | 1065 | 571 | 840 | 2980 |
| Elongation, % | 133 | 730 | 337 | 810 | 540 |
| Tensile Set, % | 3 | 44 | 14 | 47 | 212 |
| 70°C Tensile (psi) * | | | | | |
| 100% | 407 | 196 | 194 | 148 | 1330 |
| Break | 508 | 492 | 290 | 370 | 1790 |
| Elongation, % | 143 | 715 | 250 | 850 | 590 |
| R.T. Comp. Set, % | 35 | 41 | 43 | 48 | 55 |
| Flexural set, deg./5 min.+ | 5.5 | 2.5 | 7.0 | 2.0 | 23 |
| R.T. Die C Tear, kg/cm$^2$ | 8.4 | 16.5 | 10.5 | 12.3 | 40.8 |
| R.T. Secant Flex, Mod., kg/cm$^2$ | 118 | 92 | 104 | 70 | 3010 |
| M.I., 190°C, 3.0 kg/cm$^2$ | 0.72 | | 8.9 | | — |
| M.I., 190°C, 17.6 kg/cm$^2$ | 29.3 | | 247 | | — |
| M.F.R., 230°C 3.0 kg/cm$^2$/ 17.6 kg/cm$^2$ | — | | — | | 0.6/17.6 |
| Density, g/cm$^3$ | 1.23 | | 1.17 | | 0.92 |

Tensile measured on type IV dumbbells (Die C) at 508 mm./min.
Injection molding temperature 200°C for IVA and IVB and 221°C for IVC.
All mixing done on a "B" Banbury.
IVA shrinks badly after injection molding.
+ According to a Chevrolet (GM Corp.) test No. CTZ—ZZ—003.
Thickness of injection molded samples was 3.2 mm. and compression molded samples was 1.8 mm.
1. Thionic 303 — EPDM — 20 Mooney viscosity, 56% ethylene and 30 meq. of $ZnSO_3$ groups.
2. Thionic 304 — EPDM — 20 Mooney viscosity — 56% ethylene and 30 meq. of $ZnSO_3$ groups.

* The equivalent figures in kg/cm$^2$ can be obtained by multiplying by 0.07.

## EXAMPLES XI—XII
*Weatherometer Exposure of Sulfo EPDM 503X and 503X0 Compounds With UV 1084 Stabilizer and Carbon Black*

Two master batch blend compounds using a sulfonate gum containing 45 meq of stearic acid per 100 gms of sulfonated EPDM terpolymer as plasticizer were Banbury mixed. These compounds were designated 503X (employing Sunpar 2280 oil in the formulation) and 503X0 (Sunpar 180 oil). Formulations are shown in Table XX.

Both compounds were then mixed with UV stabilizer 1084 [2,2$^1$-thiobis (4-tert-octyl phenolato)-n-butylamine nickel] at levels of 0.5, 1 and 3%, based on total compound weight (equivalent to 1.6, 3.1 and 9.3% based on 70/45 gum weight).

Samples of each of the above sbatilized blends, including unstabilized controls, were mixed with 5 and 20 parts carbon black Sterling SO—1 (N—539, particle size—79 mu, surface area—42 m²/g, DP—109). In addition, unstabilized controls were mixed with 5 and 20 parts carbon black Philblack-A (N—550, particle size — 41 mu, surface area — 41 m²/g, DP—114). Sample pads (60 mil) of blends with and without carbon black were compression molded 149°C), initial stress-strain obtained and the samples exposed to weatherometer aging. Stress-strain properties were obtained after 100, 200 and 400 hours exposure on samples without carbon black and after 200, 400 and 1000 hours on samples with carbon black.

Stress-strain data are summarized in Table XXI (503X and 503X0, NO carbon black, Examples XI—XIV), Table XXII (503X, Sterling, Examples XIX—XXVI), Table XXIII, (503X0, Sterling, Examples XXVII—XXXIV) and Table XXIV (503X and 503X0, Philblack-A, Examples XXXV—XXXIX.)

The addition of UV 1084 lowers modulus and increases elongation of the compounds in proportion to the amount of stabilizer incorporated. Incorporation of carbon black increases modulus and lowers elongation.

The data in Table XXI, weatherometer exposure of 503X and 503X0 Compounds with and without UV 1084 Stabilizer, NO carbon black, are included so as to compare the effect on stress-strain properties of weatherometer aging without carbon black. These samples were exposed to a maximum of 400 hours in the weatherometer. This data shows the stabilization effect of the UV 1084 on tensile properties as well as a dramatic increase in modulus (crosslinking) with exposure. With the addition of carbon black, even the unstabilized compounds still retain 85% or more of their tensile strength up to 1000 hours exposure. The increase in modulus along with a decrease in elongation also occurs.

Similar effects of weatherometer exposure are obtained for compounds containing Philblack-A. Comparing the stress-strain data for Sterling and Philblack-A samples at the 5 phr level we observe that the increase in modulus with exposure is not as large with Philblack-A. (The word "Philblack" is a registered Trade Mark at least in the United Kingdom).

Compression set (R.T.) values before and after 1000 hours exposure are shown in Table XXV. In all cases, compression set has been reduced by almost 1/2 after 1000 hours of weatherometer exposure. Also noted is the substantially higher set obtained with the incorporation of UV 1084, both before and after exposure as compared to the unstabilized blends. The incorporation of carbon black into Thionic 503X and 503X0 compounds stabilizes against tensile property deterioration upon exposure to weatherometer aging. Crosslinking, surprisingly still is obtained, resulting in an increase in modulus and an improvement of compression set properties. The incorporation of UV 1804 lowers the modulus and increases compression set of the compounds prior to aging. Both of these latter results obviously are undesirable, and therefore the instant invention is especially valuable in not adversely lowering modulus, but increasing (improving) compression set while simultaneously giving good accelerated weathering performance.

## TABLE XX

### 503X and 503X0 FORMULATIONS

| Ingredient | 503X | 503X0 |
|---|---|---|
| 70/45 Sulfo-EPDM[a] | 112.5g | 112.5g |
| Sunpar 2280 | 80g | — |
| Sunpar 180 | — | 80g |
| Purecal U | 85g | 85g |
| Icecap K | 60g | 60g |
| ZnO | 6g | 6g |
| Mg(OH)₂ | 1.2g | 1.2g |
| ZnST₂[b] | 5g | 5g |

(a) 70/45 Sulfo-EPDM is a sulfonated EPDM having a sulfonate content of 33 milliequivalents of sulfonic acid per 100 gms of EPDM, neutralized with 70 milliequivalents of zinc acetate, to which 45 milliequivalents of stearic acid are added as a suitable plasticizer.

(b) Zn(ST)₂ is zinc stearate incorporated as additional plasticizer.

TABLE XXI
WEATHEROMETER AGING THIONIC 503X AND 503X0
WITH 0, 0.5, 1, 3% UV 1084 AND NO CARBON BLACK

| Example | Cpd | % UV 1084 | Hours Aged | 100% Mod. | % | 300% Mod. | % | Tensile | % | Elong. | % | Tensile x Elong. |
|---------|-----|-----------|------------|-----------|---|-----------|---|---------|---|--------|---|------------------|
| XIV | 503X | 0 | 0 | 259 | — | 373 | — | 808 | — | 650 | — | 5250 |
| | | | 100 | 240 | 93 | 321 | 86 | 408 | 50 | 517 | 80 | 2110 |
| | | | 200 | 245 | 95 | 321 | 86 | 342 | 42 | 437 | 67 | 1495 |
| | | | 400 | 276 | 107 | — | — | 263 | 33 | 105 | 16 | 276 |
| XV | 503X | 0.5 | 0 | 239 | — | 350 | — | 773 | — | 640 | — | 4947 |
| | | | 100 | 238 | 100 | 336 | 96 | 510 | 66 | 530 | 83 | 2703 |
| | | | 200 | 259 | 108 | 380 | 109 | 489 | 63 | 480 | 75 | 2347 |
| | | | 400 | 364 | 152 | — | — | 417 | 54 | 190 | 30 | 792 |
| XVI | 503X | 1 | 0 | 234 | — | 329 | — | 857 | — | 645 | — | 5528 |
| | | | 100 | 241 | 103 | 338 | 103 | 527 | 61 | 537 | 83 | 2830 |
| | | | 200 | 261 | 112 | 400 | 122 | 592 | 69 | 513 | 80 | 3037 |
| | | | 400 | 377 | 161 | — | — | 528 | 62 | 285 | 44 | 1505 |
| XVII | 503X | 3 | 0 | 194 | — | 287 | — | 735 | — | 627 | — | 4608 |
| | | | 100 | 179 | 92 | 255 | 89 | 597 | 81 | 567 | 90 | 3385 |
| | | | 200 | 201 | 104 | 300 | 105 | 528 | 72 | 543 | 87 | 2867 |
| | | | 400 | 317 | 163 | 523 | 182 | 615 | 84 | 397 | 63 | 2442 |
| XVIII | 503X0 | 0 | 0 | 250 | — | 367 | — | 787 | — | 640 | — | 5037 |
| | | | 100 | 240 | 96 | 329 | 90 | 405 | 51 | 510 | 80 | 2066 |
| | | | 200 | 246 | 98 | 329 | 90 | 316 | 40 | 320 | 50 | 1011 |
| | | | 400 | — | — | — | — | 272 | 35 | 73 | 11 | 199 |

TABLE XXI (Continued)

WEATHEROMETER AGING THIONIC 503X AND 503X0
WITH 0, 0.5, 1, 3% UV 1084 AND NO CARBON BLACK

| Example | Cpd | % UV 1084 | Hours Aged | 100% Mod. | % | 300% Mod. | % | Tensile | % | Elong. | % | Tensile × Elong. |
|---|---|---|---|---|---|---|---|---|---|---|---|---|
| XIX | 503X0 | 0.5 | 0 | 228 | — | 330 | — | 712 | — | 633 | — | 4507 |
| | | | 100 | 235 | 103 | 338 | 102 | 423 | 59 | 450 | 71 | 1904 |
| | | | 200 | 240 | 105 | 368 | 112 | 538 | 76 | 533 | 84 | 2868 |
| | | | 400 | 331 | 145 | — | — | 402 | 56 | 200 | 32 | 804 |
| XX | 503X0 | 1 | 0 | 207 | — | 302 | — | 728 | — | 637 | — | 4637 |
| | | | 100 | 233 | 113 | 345 | 114 | 533 | 73 | 510 | 80 | 2718 |
| | | | 200 | 246 | 119 | 378 | 125 | 593 | 81 | 533 | 84 | 3161 |
| | | | 400 | 349 | 169 | — | — | 508 | 70 | 283 | 44 | 1438 |
| XXI | 503X0 | 3 | 0 | 175 | — | 257 | — | 632 | — | 613 | — | 3874 |
| | | | 100 | 175 | 100 | 260 | 101 | 561 | 89 | 600 | 98 | 3366 |
| | | | 200 | 195 | 111 | 282 | 110 | 585 | 93 | 607 | 99 | 3551 |
| | | | 400 | 305 | 174 | 509 | 198 | 738 | 117 | 470 | 77 | 3469 |

TABLE XXII

WEATHEROMETER AGING THIONIC 503X
WITH 0, 0.5, 1, 3% UV 1084 AND 5, 20 PHR STERLING SO—1

| Example | Cpd | % UV 1084 | phr Sterling SO—1 | Hours Aged | 100% Mod. | % | 300% Mod. | % | Tensile | % | Elong. | % | Tensile × Elong. |
|---|---|---|---|---|---|---|---|---|---|---|---|---|---|
| XXII | 503X | 0 | 5 | 0 | 288 | — | 489 | — | 820 | — | 533 | — | 4371 |
| | | | | 200 | 364 | 126 | 703 | 144 | 865 | 105 | 408 | 77 | 3529 |
| | | | | 400 | 373 | 130 | 656 | 134 | 761 | 93 | 375 | 70 | 2854 |
| | | | | 1000 | 357 | 124 | 621 | 127 | 697 | 85 | 360 | 68 | 2509 |
| XXIII | 503X | 0.5 | 5 | 0 | 276 | — | 448 | — | 798 | — | 577 | — | 4604 |
| | | | | 200 | 391 | 142 | 696 | 155 | 825 | 103 | 380 | 66 | 3135 |
| | | | | 400 | 396 | 143 | — | — | 573 | 72 | 247 | 43 | 1415 |
| | | | | 1000 | 375 | 136 | 630 | 141 | 784 | 98 | 410 | 71 | 3214 |
| XXIV | 503X | 1 | 5 | 0 | 236 | — | 387 | — | 826 | — | 625 | — | 5163 |
| | | | | 200 | 348 | 147 | 647 | 167 | 876 | 106 | 425 | 68 | 3723 |
| | | | | 400 | 365 | 155 | 631 | 163 | 746 | 90 | 393 | 63 | 2932 |
| | | | | 1000 | 351 | 149 | 601 | 155 | 767 | 93 | 423 | 68 | 3244 |
| XXV | 503X | 3 | 5 | 0 | 175 | — | 275 | — | 846 | — | 677 | — | 5727 |
| | | | | 200 | 286 | 163 | 513 | 187 | 771 | 91 | 460 | 68 | 3547 |
| | | | | 400 | 321 | 183 | 557 | 203 | 783 | 93 | 440 | 65 | 3445 |
| | | | | 1000 | 319 | 182 | 546 | 199 | 741 | 88 | 430 | 64 | 3186 |

0 002 347

TABLE XXII (Continued)

WEATHEROMETER AGING THIONIC 503X
WITH 0, 0.5, 1, 3% UV 1084 AND 5, 20 PHR STERLING SO—1

| Example | Cpd | % UV 1084 | phr Sterling SO—1 | Hours Aged | 100% Mod. | % | 300% Mod. | % | Tensile | % | Elong. | % | Tensile x Elong. |
|---|---|---|---|---|---|---|---|---|---|---|---|---|---|
| XXVI | 503X | 0 | 20 | 0 | 332 | — | 533 | — | 772 | — | 490 | — | 3783 |
| | | | | 200 | 440 | 133 | 782 | 147 | 819 | 106 | 330 | 67 | 2703 |
| | | | | 400 | 438 | 132 | 764 | 143 | 861 | 112 | 380 | 78 | 3272 |
| | | | | 1000 | 427 | 129 | 721 | 135 | 777 | 101 | 355 | 72 | 2758 |
| XXVII | 503X | 0.5 | 20 | 0 | 306 | — | 504 | — | 802 | — | 540 | — | 4331 |
| | | | | 200 | 427 | 140 | 769 | 153 | 803 | 100 | 330 | 61 | 2650 |
| | | | | 400 | 439 | 144 | 763 | 151 | 841 | 105 | 360 | 67 | 3028 |
| | | | | 1000 | 428 | 140 | 725 | 144 | 791 | 99 | 357 | 66 | 2824 |
| XXVIII | 503X | 1 | 20 | 0 | 263 | — | 421 | — | 741 | — | 563 | — | 4172 |
| | | | | 200 | 402 | 153 | 726 | 172 | 848 | 114 | 383 | 68 | 3248 |
| | | | | 400 | 424 | 161 | 736 | 175 | 830 | 112 | 370 | 66 | 3071 |
| | | | | 1000 | 421 | 160 | 708 | 168 | 759 | 102 | 340 | 60 | 2581 |
| XXIX | 503X | 3 | 20 | 0 | 197 | — | 316 | — | 842 | — | 657 | — | 5532 |
| | | | | 200 | 355 | 180 | 624 | 197 | 842 | 100 | 447 | 68 | 3764 |
| | | | | 400 | 377 | 191 | 642 | 203 | 821 | 98 | 423 | 64 | 3473 |
| | | | | 1000 | 371 | 188 | 631 | 200 | 791 | 94 | 407 | 62 | 3219 |

TABLE XXIII

WEATHEROMETER AGING THIONIC 503X0
WITH 0, 0.5, 1, 3% UV 1084 AND 5, 10 PHR STERLING SO—1

| Example | cpd | % UV 1084 | phr Sterling SO—1 | Hours Aged | 100% Mod. | % | 300% Mod. | % | Tensile | % | Elong. | % | Tensile x Elong. |
|---|---|---|---|---|---|---|---|---|---|---|---|---|---|
| XXX | 503X0 | 0 | 5 | 0 | 263 | — | 416 | — | 585 | — | 480 | — | 2808 |
| | | | | 200 | 381 | 145 | — | — | 626 | 107 | 260 | 54 | 1628 |
| | | | | 400 | 372 | 141 | 633 | 152 | 687 | 116 | 340 | 71 | 2305 |
| | | | | 1000 | 356 | 135 | 607 | 146 | 776 | 133 | 425 | 89 | 2398 |
| XXXI | 503X0 | 0.5 | 5 | 0 | 227 | — | 371 | — | 809 | — | 613 | — | 4959 |
| | | | | 200 | 355 | 156 | 642 | 173 | 885 | 109 | 450 | 73 | 3983 |
| | | | | 400 | 347 | 153 | 626 | 169 | 738 | 91 | 410 | 67 | 3026 |
| | | | | 1000 | 357 | 157 | 586 | 158 | 635 | 78 | 340 | 55 | 2159 |
| XXXII | 503X0 | 1 | 5 | 0 | 206 | — | 337 | — | 785 | — | 650 | — | 5103 |
| | | | | 200 | 341 | 166 | 606 | 180 | 679 | 86 | 350 | 54 | 2377 |
| | | | | 400 | 365 | 177 | 622 | 185 | 813 | 104 | 430 | 66 | 3496 |
| | | | | 1000 | 346 | 168 | 570 | 169 | 677 | 86 | 385 | 59 | 2606 |
| XXXIII | 503X0 | 3 | 5 | 0 | 166 | — | 261 | — | 670 | — | 645 | — | 4322 |
| | | | | 200 | 265 | 160 | 472 | 181 | 685 | 102 | 435 | 67 | 2980 |
| | | | | 400 | 297 | 179 | 497 | 190 | 753 | 112 | 465 | 72 | 3501 |
| | | | | 1000 | 305 | 184 | 495 | 190 | 714 | 107 | 447 | 69 | 3192 |

0 002 347

TABLE XXIII (Continued)

WEATHEROMETER AGING THIONIC 503XO
WITH 0, 0.5, 1, 3% UV 1084 AND 5, 10 PHR STERLING SO-1

| Example | cpd | % UV1084 | phr Sterling SO-1 | Hours Aged | 100% Mod. | % | 300% Mod. | % | Tensile | % | Elong | % | Tensile % Elong. |
|---|---|---|---|---|---|---|---|---|---|---|---|---|---|
| XXXIV | 503XO | 0 | 20 | 0 | 311 | — | 504 | — | 783 | — | 527 | — | 4126 |
| | | | | 200 | 450 | 145 | 788 | 156 | 886 | 113 | 355 | 67 | 3145 |
| | | | | 400 | 447 | 144 | 756 | 150 | 862 | 110 | 380 | 72 | 3276 |
| | | | | 1000 | 442 | 142 | — | — | 672 | 86 | 290 | 55 | 1949 |
| XXXV | 503XO | 0.5 | 20 | 0 | 286 | — | 451 | — | 769 | — | 545 | — | 4191 |
| | | | | 200 | 460 | 161 | 756 | 168 | 808 | 105 | 337 | 62 | 2723 |
| | | | | 400 | 455 | 159 | 729 | 162 | 823 | 107 | 380 | 70 | 3127 |
| | | | | 1000 | 453 | 158 | 715 | 159 | 761 | 99 | 343 | 63 | 2610 |
| XXXVI | 503XO | 1 | 20 | 0 | 254 | — | 401 | — | 788 | — | 613 | — | 4830 |
| | | | | 200 | 431 | 170 | 737 | 184 | 895 | 114 | 410 | 67 | 3670 |
| | | | | 400 | 435 | 171 | 732 | 183 | 870 | 110 | 397 | 65 | 3454 |
| | | | | 1000 | 434 | 171 | 704 | 176 | 788 | 100 | 367 | 60 | 2892 |
| XXXVII | 503XO | 3 | 20 | 0 | 214 | — | 342 | — | 816 | — | 643 | — | 5247 |
| | | | | 200 | 359 | 168 | 597 | 175 | 807 | 99 | 440 | 68 | 3551 |
| | | | | 400 | 370 | 173 | 616 | 180 | 775 | 95 | 415 | 65 | 3216 |
| | | | | 1000 | 401 | 187 | 639 | 187 | 713 | 87 | 357 | 56 | 2345 |

0 002 347

TABLE XXIV

WEATHEROMETER AGING THIONIC 503X, 503X0
WITH 5 AND 20 PHR PHILBLACK A

| Example | cpd | phr Philblack A | Hours Aged | 100% Mod. | % | 300% Mod. | % | Tensile | % | Elong | % | Tensile Elong. |
|---|---|---|---|---|---|---|---|---|---|---|---|---|
| XXXVIII | 503X | 5 | 0 | 321 | — | 532 | — | 836 | — | 523 | — | 4372 |
| | | | 200 | 343 | 107 | 616 | 116 | 769 | 92 | 413 | 79 | 3176 |
| | | | 400 | 423 | 132 | 747 | 140 | 784 | 94 | 340 | 65 | 2666 |
| | | | 1000 | 402 | 125 | 684 | 129 | 767 | 92 | 380 | 73 | 2915 |
| IXL | 503X | 20 | 0 | 365 | — | 581 | — | 767 | — | 460 | — | 3528 |
| | | | 200 | 410 | 112 | 715 | 123 | 805 | 105 | 377 | 82 | 3035 |
| | | | 400 | 470 | 129 | 826 | 142 | 827 | 108 | 307 | 67 | 2539 |
| | | | 1000 | 475 | 130 | 775 | 133 | 773 | 101 | 300 | 65 | 2319 |
| XL | 503X0 | 5 | 0 | 306 | — | 492 | — | 831 | — | 547 | — | 4546 |
| | | | 200 | 330 | 108 | 578 | 117 | 855 | 103 | 500 | 91 | 4275 |
| | | | 400 | 396 | 129 | 719 | 146 | 869 | 105 | 423 | 77 | 3676 |
| | | | 1000 | 372 | 122 | 634 | 129 | 787 | 95 | 420 | 77 | 3305 |
| XLI | 503X0 | 20 | 0 | 343 | — | 539 | — | 775 | — | 505 | — | 3914 |
| | | | 200 | 381 | 111 | 648 | 120 | 820 | 106 | 440 | 87 | 3608 |
| | | | 400 | 482 | 141 | 803 | 149 | 840 | 108 | 340 | 67 | 2856 |
| | | | 1000 | 484 | 141 | 778 | 144 | 828 | 107 | 347 | 69 | 2873 |

# 0 002 347

## TABLE XXV

### COMPRESSION SET (R.T.) 503X 503XO THIONICS
### WITH STABILIZER UV 1084 AND CARBON BLACKS
### 100 HOURS WEATHEROMETER EXPOSURE

| Example | Compound | % UV 1084 | Carbon Black | Parts Black | Compression Set (30 min.) Hours in Weatherometer | |
|---|---|---|---|---|---|---|
| | | | | | 0 | 1000 |
| 1 | 503X | 0 | — | — | 42 | — |
| 9 | ,, | 0 | Sterling SO-1 | 5 | 25 | 16 |
| 13 | ,, | 0 | ,, | 20 | 25 | 10 |
| 25 | ,, | 0 | Philblack | 5 | 35 | 16 |
| 26 | ,, | 0 | ,, | 20 | 34 | 11 |
| 4 | ,, | 3 | — | — | 70 | — |
| 12 | ,, | 3 | Sterling SO-1 | 5 | 64 | 35 |
| 16 | ,, | 3 | — | 20 | 63 | 33 |
| 5 | 503XO | 0 | — | — | 39 | — |
| 17 | ,, | 0 | Sterling SO-1 | 5 | 32 | 16 |
| 21 | ,, | 0 | ,, | 20 | 28 | 12 |
| 27 | ,, | 0 | Philblack A | 5 | 39 | 16 |
| 28 | ,, | 0 | ,, | 20 | 37 | 12 |
| 8 | ,, | 3 | — | — | 70 | — |
| 20 | ,, | 3 | Sterling SO-1 | 5 | 62 | 36 |
| 24 | ,, | 3 | ,, | 20 | 71 | 38 |

## Claims

1. An elastomeric composition having a viscosity at 0.73 sec$^{-1}$ at 200°C of 5 × 10$^3$Pa is to 1 × 10$^5$Pa.s (5 × 10$^4$ poises to 1 × 10$^6$ poises), said composition being capable of being formed into an elastomeric article, which comprises:

(a) 100 parts by weight of a neutralized sulphonated elastomeric polymer having a viscosity at 0.73 sec$^{-1}$ and at 200°C of 3 × 10$^4$Pa.s to 5 × 10$^5$ Pa.s (3 × 10$^5$ poises to 5 × 10$^6$ poises) and 15 to 50 meq. sulphonate groups per 100 grams of said sulphonated elastomeric polymer, at least some of said sulphonate groups being neutralised;

b) 5 to 200 parts by weight of a non-polar process oil having less than 2 wt.% polar type compounds as measured by molecular type clay gel analysis per 100 parts by weight of said neutralised sulphonated elastomeric polymer;

(c) 25 to 350 parts by weight of an inorganic filler per 100 parts by weight of said neutralised sulphonated elastomeric polymer, the weight ratio of filler (c) to oil (b) being from 0.6:1 to 4.0:1, and the oil absorption being such that 10 to 100 gm of oil are absorbed by 100 gm of filler; and

(d) a preferential ionic plasticizer in a concentration of 3 to 60 parts by weight per 100 parts by weight of said neutralised sulphonated elastomeric polymer.

39

2. A composition according to claim 1, wherein said neutralised sulphonated elastomeric polymer is derived from Butyl rubber or an EPDM terpolymer having a number average molecular weight ($\overline{M}n$) of 10,000 to 200,000 and a Mooney viscosity (ML, 1 × 8 100°C) of 5 to 60.

3. A composition according to claim 2, wherein said EPDM terpolymer contains 40 to 80 wt % of ethylene, 10 to 59 wt % of propylene and 1 to 10 wt % of a non-conjugated diene.

4. A composition according to either of claims 2 and 3, wherein non-conjugated diene is 1,4-hexadiene, dicyclopentadiene, a 5-alkylidene-2-norbornene, a 5-alkenyl-2-norbornene or tetrahydroindene.

5. A composition according to claim 4, wherein said non-conjugated diene is 5-ethylidene-2-norbornene.

6. A composition according to any one of the preceding claims, wherein said sulphonate groups are neutralised with a cation which is ammonium, antimony, iron, aluminium, lead, a metal of Groups I—A, II—A, I—B or II—B of the Periodic Table of Elements or a mixture thereof.

7. A composition according to any one of the preceding claims, wherein said preferential plasticizer has a melting point of at least 25°C and is a carboxylic acid having at least 8 carbon atoms per molecule, a metallic salt of said carboxylic acid, a phenol, a phosphate, an amide, an ammonium or amine salt of said carboxylic acid, an amine or a mixture thereof.

8. A composition according to any one of the preceding claims, wherein said preferential plasticizer is a combination of a carboxylic acid and a metallic salt of said carboxylic acid, the metal ion of said metallic salt being that of aluminium, antimony, iron, lead, a metal of Groups I—A, II—A, I—B or II—B of the Periodic Table of Elements or a mixture thereof.

9. A composition according to claim 8, wherein said metallic salt is zinc stearate or calcium stearate.

10. A composition according to any one of the preceding claims, wherein said filler has a particle size of 0.03 to 20 microns.

11. A composition according to any one of the preceding claims, wherein said filler is clay, amorphous silica having a particle size of less than 2 microns, calcium carbonate, or a mixture thereof.

12. A composition according to any one of claims 1 to 11 wherein said filler is aluminium silicate, calcium silicate, magnesium silicate or a mixture thereof.

13. A composition according to any one of the preceding claims, wherein said non-polar process oil is paraffinic, naphthenic, aromatic, or a mixture thereof.

14. A composition according to claim 13, wherein said non-polar process oil is paraffinic having an $\overline{M}n$ of 300 to 1000.

15. A composition according to any one of the preceding claims, which includes a crystalline polyolefinic thermoplastic having a degree of crystallinity of at least 25% and a molecular weight of at least 20,000.

16. A composition according to claim 15, wherein said polyolefinic thermoplastic is added at a concentration level of less than 100 parts by weight per hundred parts by weight of sulphonated polymer.

17. A composition according to either of claims 15 and 16, wherein said polyolefinic thermoplastic has an Mn of at least 5000.

**Revendications**

1. Composition élastomérique ayant une viscosité à 0,73 s$^{-1}$ à 200°C de 5 × 10$^3$ Pa.s à 1 × 10$^5$ Pa.s (5 × 10$^4$ à 1 × 10$^6$ poises), ladite composition étant capable d'être façonnée en un article élastomérique, comprenant:

a) 100 parties en poids d'un polymère élastomérique sulfoné neutralisé ayant une viscosité à 0,73 s$^{-1}$ et à 200°C de 3 × 10$^4$ Pa.s à 5 × 10$^5$ Pa.s (3 × 10$^5$ poises à 5 × 10$^6$ poises) et 15 à 50 milli-équivalents de groupes sulfonate par 100 grammes dudit polymère élastomérique sulfoné, quelques-uns au moins des groupes sulfonate étant neutralisés;

b) 5 à 200 parties en poids d'une huile ramollissante non polaire ayant moins de 2% en poids de composés du type polaire, d'après une mesure effectuée par analyse sur gel d'argile de type moléculaire, par 100 parties en poids dudit polymère élastomérique sulfoné neutralisé;

c) 25 à 350 parties en poids d'une charge inorganique par 100 parties en poids dudit polymère élastomérique sulfoné neutralisé, le rapport en poids de la charge (c) à l'huile (b) ayant une valeur de 0,6:1 à 4,0 : 1 et l'absorption d'huile étant telle que 10 à 100 g d'huile sont absorbés par 100 g de charge;

d) un plastifiant ionique préférentiel à une concentration de 3 à 60 parties en poids pour 100 parties en poids dudit polymère élastomérique sulfoné neutralisé.

2. Composition suivant la revendication 1, dans laquelle le polymère élastomérique sulfoné neutralisé est dérivé du butyl-caoutchouc ou d'un terpolymère EPDM ayant une moyenne en nombre du poids moléculaire ($\overline{M}n$) de 10.000 à 200.000 et une viscosité Mooney (ML, 1 + 8 100°C) de 5 à 60.

3. Composition suivant la revendication 2, dans laquelle le terpolymère EPDM contient 40 à 80% en poids d'éthylène, 10 à 59% en poids de propylène et 1 à 10% en poids d'un diène non conjugué.

4. Composition suivant l'une des revendications 2 et 3, dans laquelle la diène non conjugué est le 1,4-hexadiène, le dicyclopentadiène, un 5-alkylidène-2-norbornene, un 5-alcényl-2-norbornène ou le tétrahydroindène.

5. Composition suivant la revendication 4, dans laquelle la diène non conjugué est le 5-éthylidène-2-norbornène.

6. Composition suivant l'une quelconque des revendications précédentes, dans laquelle les groupes sulfonate sont neutralisés avec un cation qui est l'ammonium, l'antimoine, le fer, l'aluminium, le plomb, un métal des groupes I—A, II—A, I—B ou II—B du Tableau Périodique des Eléments ou un mélange de ces cations.

7. Composition suivant l'une quelconque des revendications précédentes, dans laquelle le plastifiant préférentiel a un point de fusion d'au moins 25°C et est un acide carboxylique ayant au moins 8 atomes de carbone par molécule, un sel métallique dudit acide carboxylique, un phénol, un phosphate, un amide, un sel d'ammonium ou d'amine dudit acide carboxylique, une amine ou un mélange de ces composés.

8. Composition suivant l'une quelconque des revendications précédentes, dans laquelle le plastifiant préférentiel est une association d'un acide carboxylique et d'un sel métallique dudit acide carboxylique, l'ion métallique dudit sel métallique étant celui de l'aluminium de l'antimoine, du fer, du plomb, d'un métal des groupes I—A, II—A, I—B ou II—B du Tableau Périodique des Eléments ou un mélange de ces ions.

9. Composition suivant la revendication 8, dans laquelle le sel métallique est le stéarate de zinc ou le stéarate de calcium.

10. Composition suivant l'une quelconque des revendications précédentes, dans laquelle la charge a une grosseur de particules de 0,03 à 20 microns.

11. Composition suivant l'une quelconque des revendications précédentes, dans laquelle la charge est une argile, de la silice amorphe en particules de diamètre inférieur à 2 microns, du carbonate de calcium ou un mélange de ces matières.

12. Composition suivant l'une quelconque des revendications 1 à 11, dans laquelle la charge est le silicate d'aluminium, le silicate de calcium, le silicate de magnésium ou un mélange de ces matières.

13. Composition suivant l'une quelconque des revendications précédentes, dans laquelle l'huile ramollissante non polaire est un huile paraffinique, naphténique, aromatique, ou un mélange de ces huiles.

14. Composition suivant la revendication 13, dans laquelle l'huile ramollissante non polaire est une huile paraffinique ayant une valeur $\overline{M}n$ de 300 à 1000.

15. Composition suivant l'une quelconque des revendications précédentes, qui comprend une matière thermoplastique polyoléfinique cristalline ayant un degré de cristallinité d'au moins 25% et un poids moléculaire d'au moins 20.000.

16. Composition suivant la revendication 15, dans laquelle la matière thermoplastique polyoléfinique est ajoutée à une concentration de moins de 100 parties en poids pour 100 parties en poids de polymère sulfoné.

17. Composition suivant l'une des revendications 15 et 16, dans laquelle la matière thermoplastique polyoléfinique a une valeur $\overline{M}n$ d'au moins 5000.

**Patentansprüche**

1. Elastomere, zu elastomeren Gegenständen formbare Zusammensetzung mit einer Viskosität bei 0,73 sec$^{-1}$ und 200°C von $5 \times 10^3$ bis $1 \times 10^5$ Pa.s ($5 \times 10^4$ bis $1 \times 10^6$ Poise) gekennzeichnet durch:

(a) 100 Gewichtsteile eines neutralisierten, sulfonierten, elastomeren Polymers mit einer Viskosität bei 0,73 sec$^{-1}$ und 200°C von $3 \times 10^4$ bis $5 \times 10^5$ Pa.s ($3 \times 10^5$ bis $5 \times 10^6$ Poise) und 15 bis 50 Milliäquivalenten Sulfonatgruppen je 100 g des sulfonierten elastomeren Polymers, wobei mindestens ein Teil der Sulfonatgruppen neutralisiert ist;

(b) 5 bis 200 Gewichtsteile, bezogen auf 100 Gewichtsteile des neutralisierten, sulfonierten, elastomeren Polymers, eines nicht polaren Prozessöls mit weniger als 2 Gew.% polaren Verbindungen (gemessen durch Ton-Gel-Molekularsiebanalyse);

(c) 25 bis 350 Gewichtsteile eines anorganischen Füllstoffes je 100 Gewichtsteile des neutralisierten, sulfonierten, elastomeren Polymers, wobei das Gewichtsverhältnis von Füllstoff (c) zu Öl (b) 0,6:1 bis 4,0:1 beträgt und die Ölabsorption so ist, daß 10 bis 100 g Öl von 100 g Füllstoff absorbiet werden; und

(d) einen bevorzugten ionischen Weichmacher in einer Konzentration von 3 bis 60 Gewichtsteilen je 100 Gewichtsteile des neutralisierten, sulfonierten, elastomeren Polymers.

2. Zusammensetzung nach Anspruch 1, dadurch gekennzeichnet, daß das neutralisierte, sulfonierte, elastomere Polymer aus einem Butylgummi oder einem EPDM-Terpolymer mit einem zahlen-

durchschnittlichen Molekulargewicht ($\overline{Mn}$) von 10 000 bis 200 000 und einer Mooney-Viskosität (ML, 1 + 8 100°C) von 5 bis 60 erhalten ist.

3. Zusammensetzung nach Anspruch 2, dadurch gekennzeichnet, daß das EPDM-Terpolymer 40 bis 80 Gew.% Ethylen, 10 bis 59 Gew.% Propylen und 1 bis 10 Gew.% eines nicht konjungierten Diens enthält.

4. Zusammensetzung nach Anspruch 2 oder 3, dadurch gekennzeichnet, daß das nicht konjungierte Dien 1,4- Hexadien, Dicyclopentadien, ein 5-Alkyliden-2-norbornen, ein 5-Alkenyl-2-norbornen oder Tetrahydroinden ist.

5. Zusammensetzung nach Anspruch 4, dadurch gekennzeichnet, daß das nicht konjungierte Dien 5-Ethyliden-2-norbornen ist.

6. Zusammensetzung nach den Ansprüchen 1 bis 5, dadurch gekennzeichnet, daß die Sulfonatgruppen mit einen Kation, das Ammonium, Antimon, Eisen, Aluminium, Blei, ein Metall der Gruppen IA, IIA, IB oder IIB des periodischen Systems der Elemente oder eine Mischung derselben ist, neutralisiert sind.

7. Zusammensetzung nach den Ansprüchen 1 bis 6, dadurch gekennzeichnet, daß der bevorzugte Weichmacher einen Schmelzpunkt von mindestens 25°C aufweist und eine Carbonsäure mit mindestens 8 Kohlenstoffatomen je Molekül, ein Metallsalz der Carbonsäure, ein Phenol, ein Phosphat, ein Amid, ein Ammonium- oder Aminsalz der Carbonsäure, ein Amin oder eine Mischung derselben ist.

8. Zusammensetzung nach den Ansprüchen 1 bis 7, dadurch gekennzeichnet, daß der bevorzugte Weichmacher eine Kombination einer Carbonsäure und eines Metallsalzes der Carbonsäure ist, wobei das Metallion des Metallsalzes Aluminium, Antimon, Eisen, Blei, ein Metall der Gruppen IA, IIA, IB oder IIB des periodischen Systems der Elemente oder eine Mischung derselben ist.

9. Zusammensetzung nach Anspruch 8, dadurch gekennzeichnet, daß das Metallsalz Zinkstearat oder Calciumstearat ist.

10. Zusammensetzung nach den Ansprüchen 1 bis 9, dadurch gekennzeichnet, daß der Füllstoff eine Teilchengröße von 0,03 bis 20 $\mu$m besitzt.

11. Zusammensetzung nach den Ansprüchen 1 bis 10, dadurch gekennzeichnet, daß der Füllstoff Ton, amorphes Siliciumdioxid mit einer Teilchengröße von weniger als 2 $\mu$m, Calciumcarbonat oder eine Mischung derselben ist.

12. Zusammensetzung nach den Ansprüchen 1 bis 11, dadurch gekennzeichnet, daß der Füllstoff Aluminiumsilikat, Calciumsilikat, Magnesiumsilikat oder eine Mischung derselben ist.

13. Zusammensetzung nach den Ansprüchen 1 bis 12, dadurch gekennzeichnet, daß das nicht polare Prozessöl ein paraffinisches Öl, ein naphthenisches Öl, ein aromatisches Öl oder eine Mischung derselben ist.

14. Zusammensetzugn nach Anspruch 13, dadurch gekennzeichnet, daß das nicht polare Prozessöl ein paraffinisches Öl mit einem zahlendurchschnittlichem Molekulargewicht $\overline{Mn}$ von 300 bis 1000 ist.

15. Zusammensetzung nach den Ansprüchen 1 bis 14, dadurch gekennzeichnet, daß sie einen kristallinen polyolefinischen Thermoplast mit einem Kristallinitätsgrad von mindestens 25% und einem Molekulargewicht von mindestens 20 000 enthält.

16. Zusammensetzung nach Anspruch 15, dadurch gekennzeichnet, daß der polyolefinische Thermoplast in einer Konzentration von weniger als 100 Gewichtsteilen je 100 Gewichtsteile sulfoniertes Polymer zugesetzt ist.

17. Zusammensetzung nach Anspruch 15 oder 16, dadurch gekennzeichnet, daß der polyolefinische Thermoplast ein zahlendurchschnittliches Molekulargewicht $\overline{Mn}$ von mindestens 5000 aufweist.